# EUROPEAN PATENT APPLICATION

(11) **EP 1 713 282 A2**
(43) Date of publication of application: **18.10.2006**
(21) Application number: 06252064.8
(22) Date of filing: 13.04.2006
(51) Int. Cl.: H04N 7/26

(54) **Transcoder enabling random access to video data**

(30) Priority: 15.04.2005 JP 2005119047
(71) Applicant: SONY CORPORATION, Tokyo 141 (JP)
(72) Inventor: Shigata, Taro, Sony Corporation, Tokyo 141 (JP); Ogikubo, Junichi, Sony Corporation, Tokyo 141 (JP)
(74) Representative: Turner, James Arthur

(57) **Abstract**

With an information processing method for generating information utilizable for decoding a bit stream, a forward prediction encoded frame of the bit stream is decoded, the decoded forward prediction encoded frame is subjected to intra-frame encoding, the bit stream is analyzed, and attribute information is generated that is utilizable for decoding the bit stream based on the encoded information relating to the encoded data generated by encoding and the analysis results obtained by the analyzing.

## Description

The present invention relates to a program, an information processing device, an information processing method, and a recording medium, and particularly (though not exclusively) relates to a program, an information processing device, an information processing method, and a recording medium, suitable for performing random playback.

As a typical encoding system of moving image data, a motion compensated predictive encoding system represented by the MPEG (Moving Picture Experts Group) encoding system can be cited.

The motion compensated predictive encoding system can be classified roughly into two types of encoding systems of intra encoding (intra-frame encoding) and inter encoding (inter-frame reference encoding). With the intra encoding, encoding is performed based on the correlation in increments of macro block within an encoded image. With the inter encoding, images temporally before and after the encoded image are taken as reference images, and the differences between the predictive image to be generated from the reference images thereof and the encoded image is encoded (e.g., see Japanese Unexamined Patent Application Publication No. 08-102951).

With the past MPEG decoding, in the event of decoding a P frame, a reference image is generated by decoding the last I frame or P frame serving as a reference image, and the target P frame is decoded based on this.

Accordingly, in the event of decoding a P frame positioned backward of a GOP, it is necessary to decode multiple frames to decode the target P frame.

Also, in the event of decoding a B frame, the P frames back and forth thereof need to be used as reference images, and prior to decoding the desired B frame, the P frames back and forth thereof need to be decoded.

Accordingly, with random playback (scrub playback), when attempting to play back a P frame or B frame isolated temporally within a stream, it takes a long time for decoding since the frames other than that frame are employed as reference frames, and consequently it is difficult to decode and output a necessary image in a short period of time.

The present invention has been made in light of such a situation, and addresses enabling a necessary image to be output in a short period of time, in the event of performing random playback.
Various respective aspects and features of the invention are defined in the appended claims. Features from the dependent claims may be combined with features of the independent claims as appropriate and not merely as explicitly set out in the claims.

A program according to an embodiment of the present invention causes a computer to execute processing including the steps of forward prediction encoded frame decoding for decoding a forward prediction encoded frame of a bit stream, encoding for subjecting the forward prediction encoded frame decoded with the processing in the forward prediction encoded frame decoding to the intra-frame encoding, analyzing for analyzing a bit stream, and attribute information generating for generating attribute information utilizable for decoding the bit stream based on the encoded information relating to the encoded data generated with the processing in the encoding and the analysis results obtained with the processing in the analyzing.

The processing to be executed by the computer may further include bit stream decoding, for decoding the bit stream based on the encoded data encoded with the processing in the encoding, and the attribute information generated with the processing in the attribute information generating.

The processing in the bit stream decoding may include determining for determining the encoded type of a frame to be decoded, first decoding for decoding the intra-frame encoded frame to be decoded of the bit stream in the event that determination is made with the processing in the determining that a frame to be decoded is an intra-frame encoded frame of the bit frame, second decoding for decoding the encoded data corresponding to the forward prediction encoded frame to be decoded, of the encoded data encoded with the processing in the encoding in the event that determination is made with the processing in the determining that a frame to be decoded is a forward prediction encoded frame of the bit stream, reference image generating for generating a reference image by decoding the intra-frame encoded frame of the bit stream necessary for decoding the both-way prediction encoded frame, or generating a reference image by decoding the encoded data corresponding to the forward prediction encoded frame of the bit stream necessary for decoding the both-way prediction encoded frame of the encoded data encoded with the processing in the encoding in the event that determination is made with the processing in the determining that a frame to be decoded is a both-way prediction encoded frame, of the bit stream, and third decoding for decoding the both-way prediction encoded frame of the bit stream with reference to the reference image generated with the processing in the reference image generating.

The processing in the encoding may encode the forward prediction encoded frame decoded with the processing in the forward prediction encoded frame decoding into intra-frame encoded data having a fixed rate.

The processing in the encoding may encode the forward prediction encoded frame decoded with the processing in the forward prediction encoded frame decoding into intra-frame encoded data having a floating rate.

The processing in the forward prediction encoded frame decoding may selectively decode a predetermined number of forward prediction encoded frames of the bit stream; and the processing in the encoding may subject a predetermined number of the forward prediction encoded frames decoded with the processing in the forward prediction encoded frame decoding to the intra-frame encoding.

The processing to be executed by the computer may further include setting, for setting the predetermined number of the forward prediction encoded frames to be decoded selectively with the processing in the forward prediction encoded frame decoding based on the number of frames, which can be subjected to decoding processing during display of an image corresponding to one frame, and the number of forward prediction encoded frames.

The processing of the program may further include a step of calculating the number of frames regarding which decoding processing can be performed during the display time of an image corresponding to one frame.

The processing in the forward prediction encoded frame decoding may selectively decode a predetermined number of forward prediction encoded frames to be decoded so as to suppress a continuous number of a predetermined number of forward prediction encoded frames of the bit stream to the minimum.

An information processing device according to an embodiment of the present invention includes forward prediction encoded frame decoding means configured to decode a forward prediction encoded frame of a bit stream, encoding means configured to subject the forward prediction encoded frame decoded by the forward prediction encoded frame decoding means to the intra-frame encoding, and attribute information generating means configured to analyze the bit stream, and generate attribute information utilizable for decoding the bit stream based on the analysis results of the bit stream and the encoded information relating to the encoded data generated by the encoding means.

The information processing device according to an embodiment of the present invention may further include bit stream decoding means configured to decode the bit stream based on the encoded date generated by the encoding means and the attribute information generated by the attribute information generating means.

An information processing method according to an embodiment of the present invention comprises the steps of forward prediction encoded frame decoding for decoding a forward prediction encoded frame of a bit stream, encoding for subjecting the forward prediction encoded frame decoded with the processing in the forward prediction encoded frame decoding to the intra-frame encoding, analyzing for analyzing the bit stream, and attribute information generating for generating attribute information utilizable for decoding the bit stream based on the encoded information relating to the encoded data generated with the processing in the encoding and the analysis results obtained with the processing in the analyzing.

A storage medium according to an embodiment of the present invention stores the program.

An information processing device according to an embodiment of the present invention, for generating information utilizable for decoding a bit stream, includes a forward prediction encoded frame decoding unit configured to decode a forward prediction encoded frame of the bit stream, an encoding unit configured to subject the forward prediction encoded frame decoded by the forward prediction encoded frame decoding unit to intra-frame encoding, and an attribute information generating unit configured to analyze the bit stream, and generate attribute information utilizable for decoding the bit stream based on the analysis results of the bit stream and the encoded information relating to the encoded data generated by the encoding unit.

Thus, according to embodiments of the present invention, a forward prediction encoded frame is decoded, the decoded forward prediction encoded frame is subjected to the intra-frame encoding, a bit stream is analyzed, and attribute information is generated based on the information relating to encoding and the analysis results. The intra-frame encoded data and attribute information can be utilized for decoding of the bit stream.

Also according to embodiments of the present invention, the attribute information of a bit stream can be generated, and particularly, a forward prediction encoded frame is decoded, and the decoded forward prediction encoded frame is subjected to the intra-frame encoding, whereby the bit stream can be subjected to high-speed random playback using the frame subjected to the intra-frame encoding and the attribute information.

The invention will now be described by way of example with reference to the accompanying drawings, throughout which like parts are referred to by like references, and in which:
Fig. 1 is a block diagram illustrating the configuration of a player device to which the present invention has been applied;
Fig. 2 is a block diagram illustrating the configuration of the converting unit shown in Fig. 1;
Fig. 3 is a diagram for describing an index file;
Fig. 4 is a diagram for describing a case wherein the bit rate of an I picture is fixed;
Fig. 5 is a diagram for describing a case wherein the bit rate of an I picture is variable;
Fig. 6 is a block diagram illustrating the configuration of the player device shown in Fig. 1 ;
Figs. 7A and 7B are diagrams describing a case of P picture random playback;
Figs. 8A and 8B are diagrams describing a case of B picture random playback;
Fig. 9 is a block diagram illustrating the configuration of a personal computer;
Fig. 10 is a function block diagram for describing functions realized by the personal computer shown in Fig. 9;
Fig. 11 is a flowchart for describing proxy file generating processing 1;
Fig. 12 is a flowchart for describing random playback processing 1;
Fig. 13 is a chart for describing a case of changing the number of PI conversions;
Figs. 14A and 14B are diagrams for describing minimal decoding;
Figs. 15A and 15B are diagrams for describing minimal decoding;
Figs. 16A and 16B are diagrams for describing minimal decoding;
Figs. 17A and 17B are diagrams for describing minimal decoding;
Figs. 18A and 18B are diagrams for describing minimal decoding;
Fig. 19 is a flowchart for describing setting processing of a P picture to be converted;
Fig. 20 is a flowchart for describing decodable frame number calculating processing;
Fig. 21 is a diagram for describing setting of a P picture to be converted; and
Fig. 22 is a flowchart for describing proxy file generating processing 2.
Fig. 23 is a flowchart for describing random playback processing 2;

Before describing an embodiment of the present invention, the correspondence between the features of the claims and the specific elements disclosed in an embodiment of the present invention is discussed below. This description is intended to assure that an embodiment supporting the claimed invention is described in this specification. Thus, even if an element in the following embodiment is not described as relating to a certain feature of the present invention, that does not necessarily mean that the element does not relate to that feature of the claims. Conversely, even if an element is described herein as relating to a certain feature of the claims that does not necessarily mean that the element does not relate to other features of the claims.

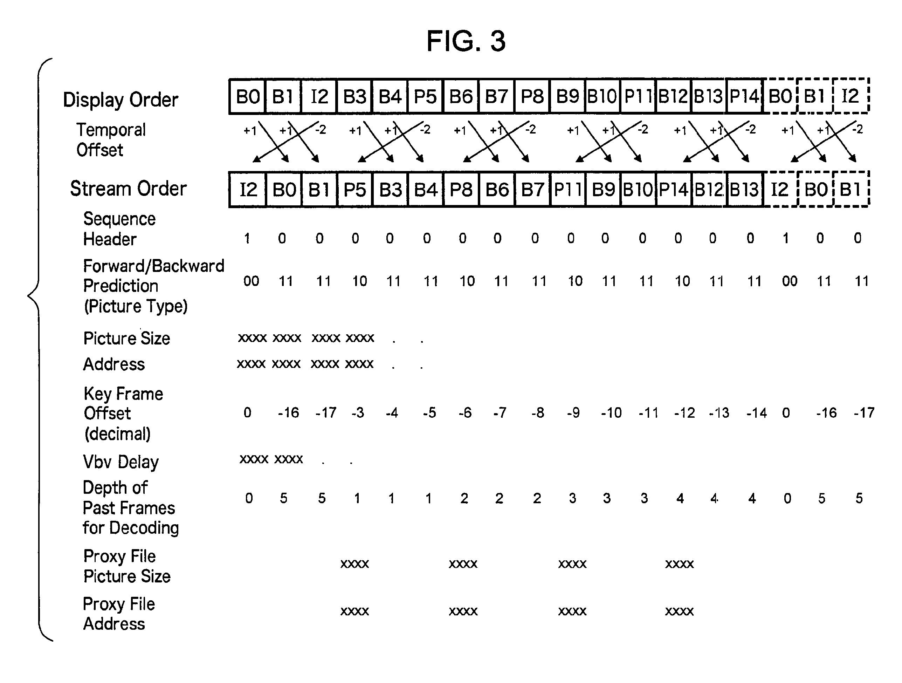

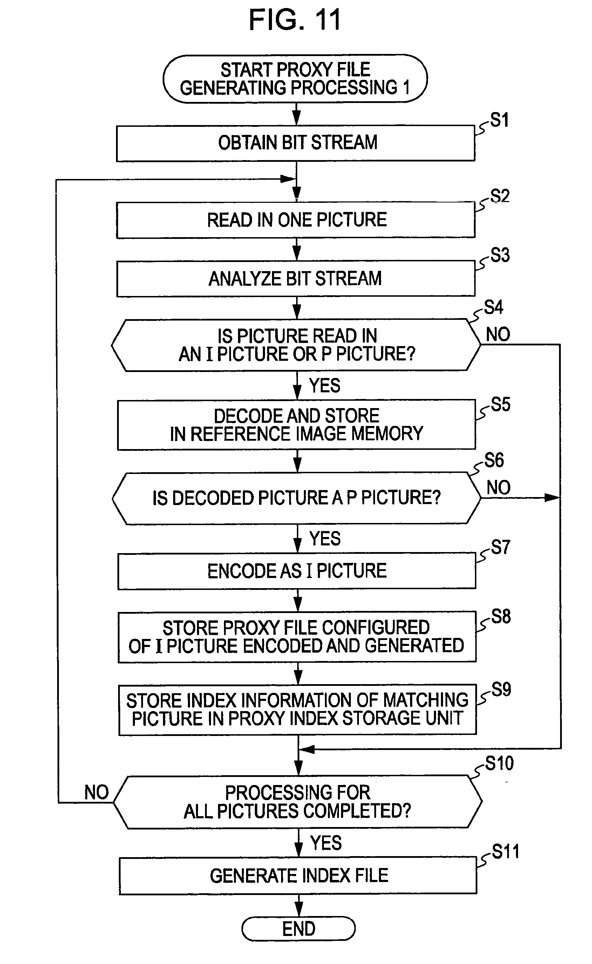

A program or information processing method according to an embodiment of the present invention causes a computer to execute processing including a forward prediction encoded frame decoding step (e.g., processing in step S5 in Fig. 11) for decoding a forward prediction encoded frame (e.g., P picture) of a bit stream, an encoding step (e.g., processing in step S7 in Fig. 11) for subjecting the forward prediction encoded frame decoded with the processing of the forward prediction encoded frame decoding step to the intra-frame encoding, an analysis step (e.g., processing in step S3 in Fig. 11) for analyzing the bit stream, and an attribute information generating step (e.g., processing in step S11 in Fig. 11) for generating attribute information utilizable for decoding the bit stream based on the encoded information relating to the encoded data generated with the processing of the encoding step (e.g., Proxy File Picture Size, and Proxy File Address in Fig. 3) and the analysis results obtained with the processing of the analysis step.

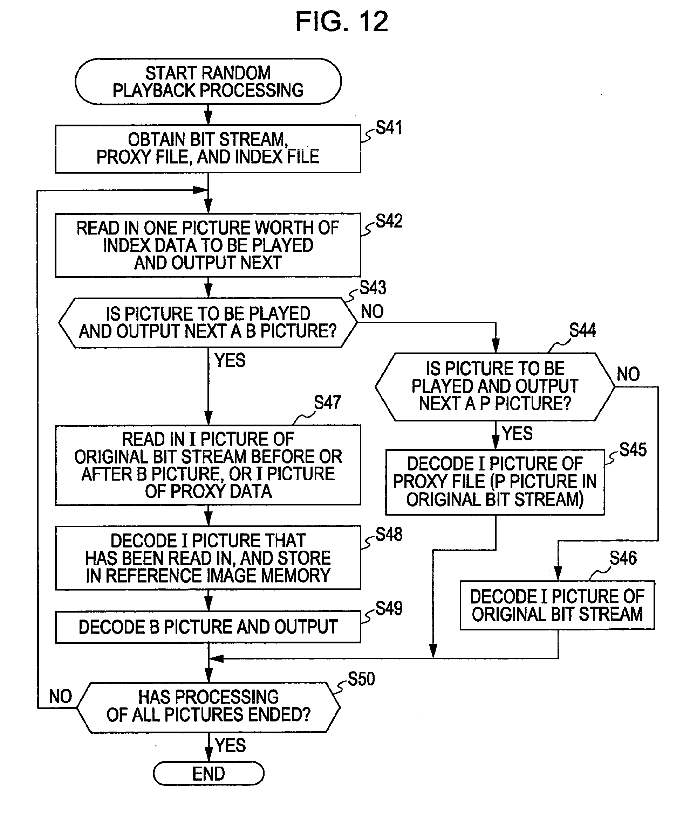

The processing to be executed by the computer further can include a bit stream decoding step (e.g., processing in steps S43 through S50 in Fig. 12) for decoding the bit stream based on the encoded data encoded with the processing in the encoding step, and the attribute information generated with the processing in the attribute information generating step.

The processing in the bit stream decoding step may include a determining step (e.g., processing in step S43 or step S44 in Fig. 12) for determining the encoded type of a frame to be decoded, a first decoding step (processing in step S46 in Fig. 12) for decoding the intra-frame encoded frame to be decoded of a bit stream in the event that determination is made with the processing in the determining step that a frame to be decoded is an intra-frame encoded frame (e.g., I picture) of the bit stream, a second decoding step (processing in step S45 in Fig. 12) for decoding the encoded data corresponding to the forward prediction encoded frame to be decoded of the encoded data encoded with the processing in the encoding step in the event that determination is made with the processing in the determining step that a frame to be decoded is a forward prediction encoded frame (e.g., P picture) of the bit stream, a reference image generating step (processing in step S48 in Fig. 12) for generating a reference image by decoding the inter-frame encoded frame of the bit stream necessary for decoding the both-way prediction encoded frame, or generating a reference image by decoding the encoded data corresponding to the forward prediction encoded frame of the bit stream necessary for decoding the both-way prediction encoded frame of the encoded data encoded with the processing in the encoding step, in the event that determination is made with the processing in the determining step that a frame to be decoded is a both-way prediction encoded frame (e.g., B picture) of the bit stream, and a third decoding step (processing in step S49 in Fig. 12) for decoding the both-way prediction encoded frame of the bit stream with reference to the reference image generated with the processing in the reference image generating step.

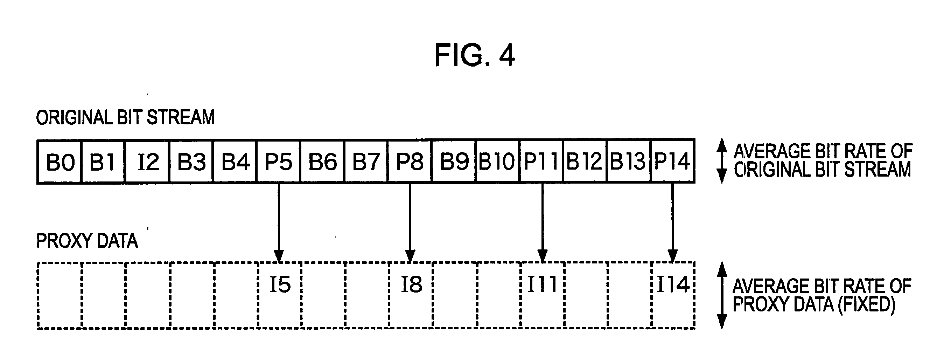

The processing in the encoding step may encode the forward prediction encoded frame decoded with the processing in the forward prediction encoded frame decoding step into intra-frame encoded data having a fixed rate (e.g., perform encoding such as shown in Fig. 4).

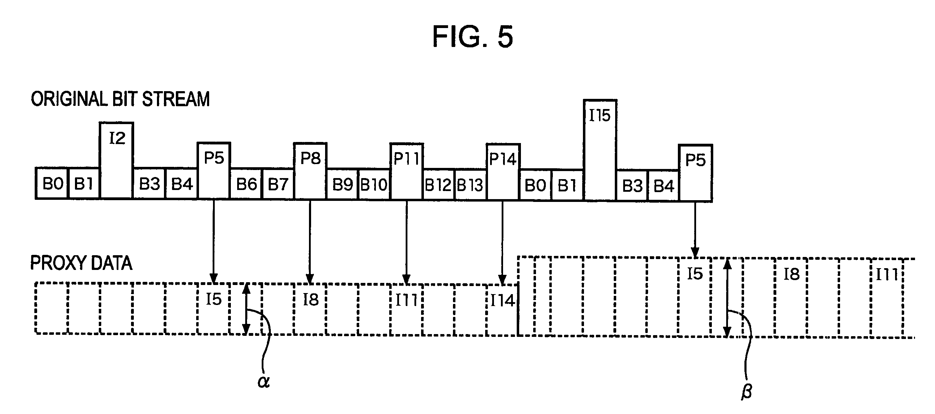

The processing in the encoding step may encode the forward prediction encoded frame decoded with the processing in the forward prediction encoded frame decoding step into intra-frame encoded data having a floating rate (e.g., perform encoding such as shown in Fig. 5).

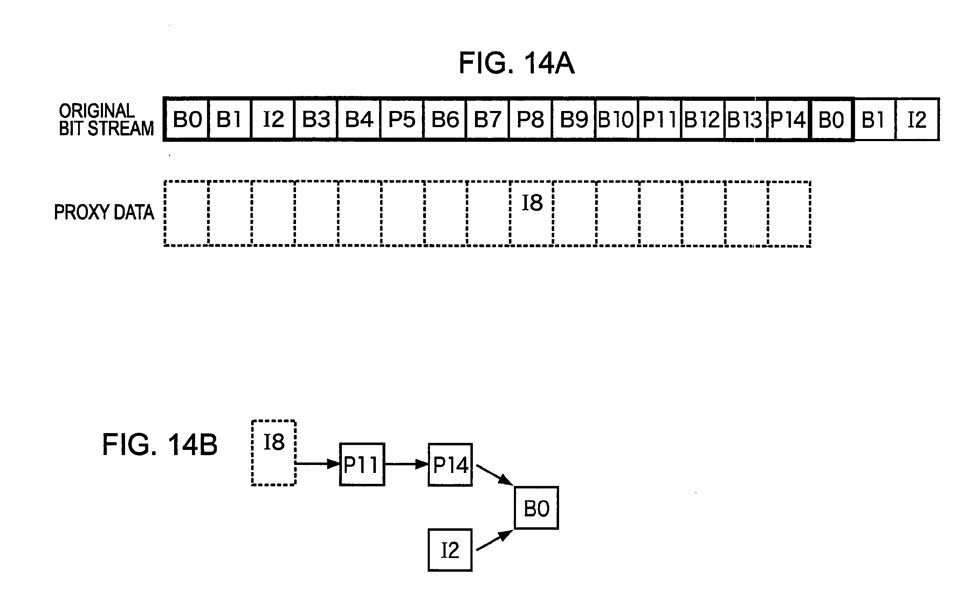

The processing in the forward prediction encoded frame decoding step may selectively decode a predetermined number of forward prediction encoded frames of the bit stream (e.g., as described with reference to Figs. 14 through 18), and the processing in the encoding step may subject the predetermined number of forward prediction encoded frames decoded with the processing in the forward prediction encoded frame decoding step to the intra-frame encoding.

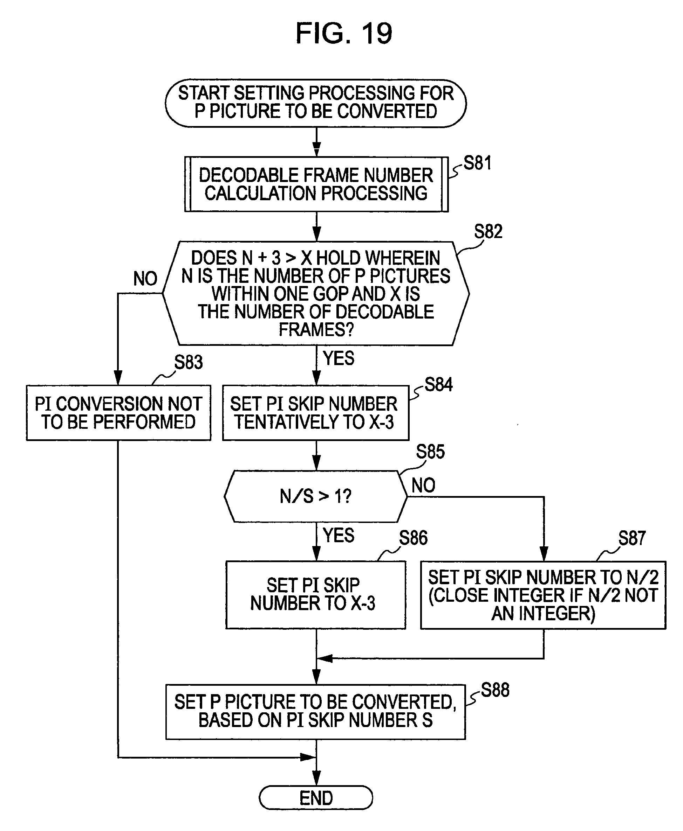

The processing to be executed by the computer may further include a setting step (e.g., processing shown in Fig. 19) for setting the predetermined number of forward prediction encoded frames to be decoded selectively with the processing in the forward prediction encoded frame decoding step based on the number of frames (e.g., the number of decodable frames), which can be subjected to decoding processing during display of an image corresponding to one frame, and the number of forward prediction encoded frames.

The processing of the program may further include a step of calculating the number of frames (e.g., number of decodable frames) regarding which decoding processing can be performed during the display time of an image corresponding to one frame (e.g., the processing of step S81 in Fig. 19).

The processing in the forward prediction encoded frame decoding step may selectively decode a predetermined number of forward prediction encoded frames to be decoded so as to suppress a continuous number of a predetermined number of forward prediction encoded frames, of the bit stream, to the minimum (e.g., as described with reference to Figs. 14 through 18).

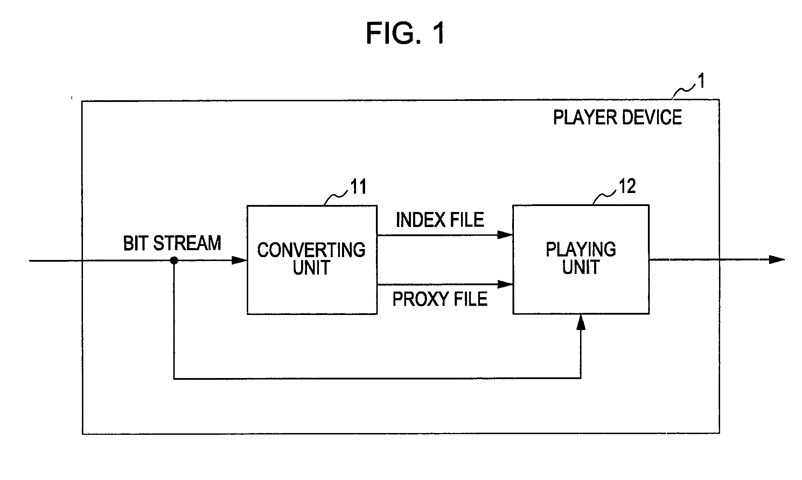

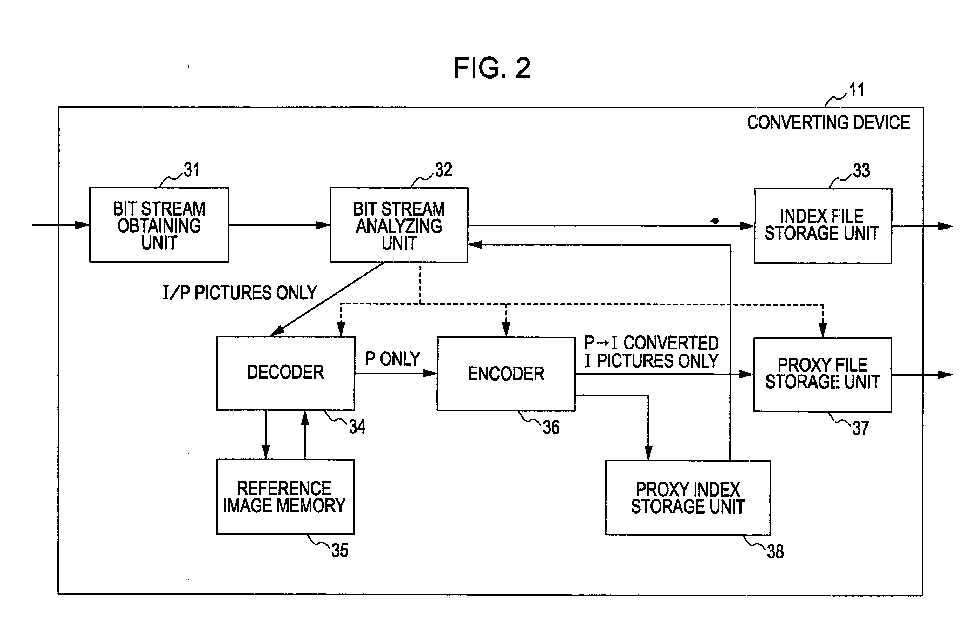

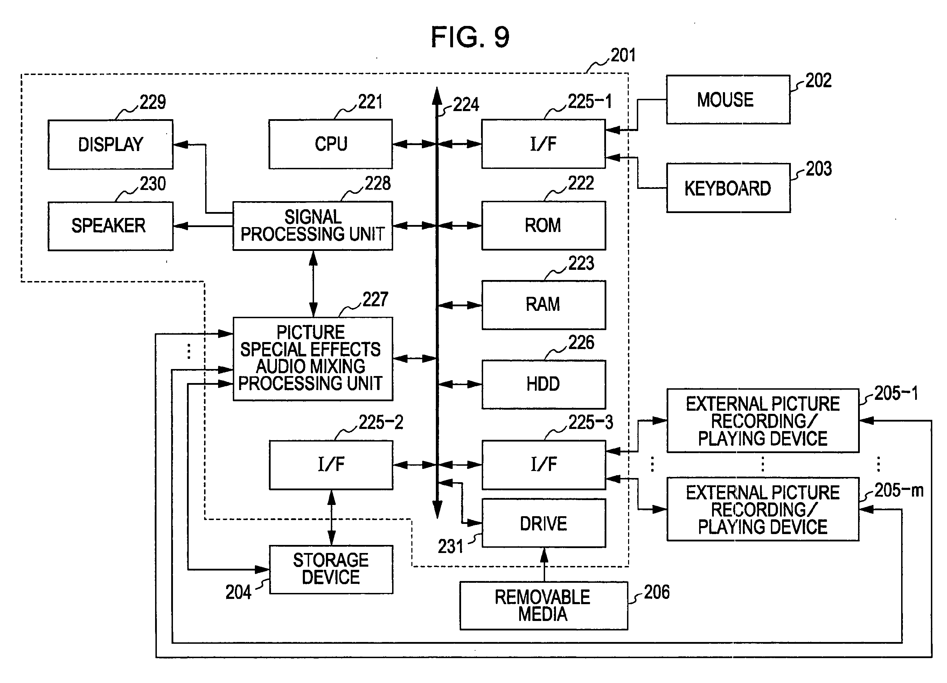

The information processing device according to an embodiment of the present invention is an information processing device (e.g., player device in Fig. 1 or personal computer 201 in Fig. 9) for generating information utilizable for decoding a bit stream, and includes forward prediction encoded frame decoding means (e.g., decoder 34 in Fig. 2) configured to decode a forward prediction encoded frame (P picture) of the bit stream, encoding means (e.g., encoder 36 in Fig. 2) configured to subject the forward prediction encoded frame decoded by the forward prediction encoded frame decoding means to the intra-frame encoding, and attribute information generating means (e.g., bit stream analyzing unit 32 in Fig. 2) configured to analyze the bit stream, and generate attribute information (e.g., index file) utilizable for decoding the bit stream based on the analysis results of the bit stream and the encoded information (e.g., Proxy File Picture Size, and Proxy File Address in Fig. 3) relating to the encoded data generated by the encoding means.

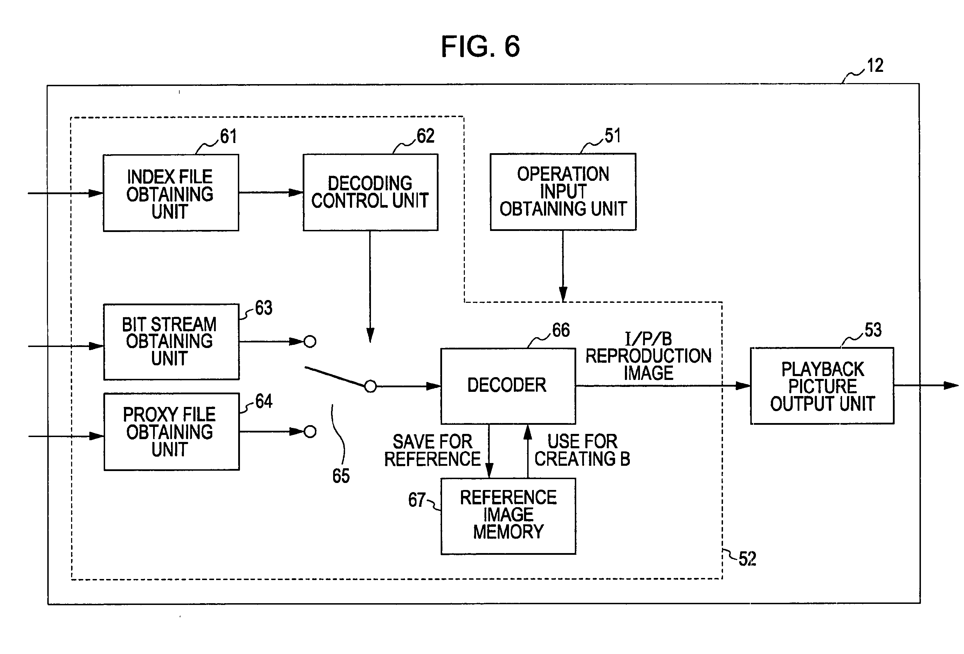

The information processing device according to an embodiment of the present invention may further include bit stream decoding means (e.g., playing unit 12 in Fig. 6) for decoding a bit stream based on the attribute information generated by the attribute information generating means.

The following is a description of an embodiment of the present invention with reference to the drawings.

Fig. 1 illustrates a configuration example of a player device 1 to which the present invention has been applied.

The player device 1 is made up of a converting unit 11 and a playing unit 12.

The converting unit 11 receives a bit stream (bit stream made up of I pictures (intra-frame encoded frames), P pictures (forward prediction encoded frames), and B pictures (both-way prediction encoded frames)) encoded with inter-frame reference encoding such as MPEG2 LongGOP stream for example, generates an index file to be referenced in the case of being decoded at the playing unit 12, and also generates a proxy file by encoding the P pictures of the supplied bit stream to convert into I pictures, and supplies the generated index file and proxy file to the playing unit 12. The details of the converting unit 11 will be described later with reference to Fig. 2.

The playing unit 12 receives a bit stream including I pictures, P pictures, and B pictures, and also receives an index file and a proxy file from the converting unit 11, and decodes the bit stream based on operating input from the user to play back this from the desired position of the user. The details of the playing unit 12 will be described later with reference to Fig. 6.

Fig. 2 is a block diagram illustrating a further detailed configuration example of the converting unit 11 in Fig. 1.

A bit stream obtaining unit 31 receives supply of a bit stream including I pictures, P pictures, and B pictures, and supplies this to a bit stream analyzing unit 32.

The bit stream analyzing unit 32 receives supply of the bit stream including I pictures, P pictures, and B pictures, and of these, supplies the I pictures and P pictures to a decoder 34. Also, the bit stream analyzing unit 32 controls the decoder 34, an encoder 36, and a proxy file storage unit 37. Also, the bit stream- analyzing unit 32 analyzes the bit stream supplied, and also analyzes the result of the processing executed by the encoder 36 and information to be stored in a later-described proxy index storage unit 38, generates an index file shown in Fig. 3, and supplies this to an index file storage unit 33.

The index file shown in Fig. 3 stores information to be referenced in the case of decoding the original bit stream acquired by the bit stream obtaining unit 31, and supplied to the bit stream analyzing unit 32. The index file shown in Fig. 6 lists the order of pictures in display order, the order of pictures in stream order, and the amount of offset (temporal offset) involved in converting the order of pictures from the display order to the stream order. Also, information indicating the position of a sequence header in the stream order is indicated in Fig. 6 by zeroes and ones, 1 indicating that there is a sequence header and 0 indicating that there is none. Also, information indicating whether or not there is a forward or backward reference image (forward/backward prediction (picture type)) is listed here.

Note that the information indicating whether or not there is a forward or backward reference image assumes that the supplied bit stream is OpenGOP in this example, with a forward reference frame (i.e., P picture) indicated by "10", a both-way reference frame (i.e., B picture) indicated by "11 ", and an intra-frame encoded data (i.e., I picture) indicated by "00". In the event that the supplied bit stream is ClosedGOP, the two B pictures following intra-frame encoded data (i.e., I picture) only refer backward, and accordingly "01" is given.

The index file lists the picture size of each picture, and the address of the picture within the stream or within the recording region. Also, the index file lists information (key frame offset (decimal)) indicating the distance between a picture and a key frame picture (in this case, an I picture where intra-frame encoding processing is performed), and VbvDelay (VBV stands for Video Buffer Verifier) indicating the accumulation amount at a virtual input buffer of the decoder in terms of a 90 KHz clock. Further, the index file lists the depth of past frames for decoding, which is the number of frames (depth) between the frame to be played to the farthest frame.

Further, the index file stores, as encoded information relating to the I pictures encoded by the encoder 36 which are the frames corresponding to the P pictures in the original stream included in a proxy file, the size of the pictures (Proxy File Picture Size) and the addresses of those frames (Proxy File Address). Those information is stored in a later-described proxy index storage unit 38.

Details of the proxy file will be described later.

The index file storage unit 33 stores the index file, described with reference to Fig. 3, supplied from the bit stream analyzing unit 32.

The decoder 34 decodes the I pictures and P pictures supplied from the bit stream analyzing unit 32, generates uncompressed base band images, and supplies the uncompressed base band image data corresponding to the P pictures to the encoder 36. At this time, in the event that the uncompressed base band images generated are going to become necessary as reference images of frames to be decoded later, the decoder 34 also supplies the generated uncompressed base band images to reference image memory 35 for storage, and in the event of decoding P pictures, makes reference to the reference images stored in the reference image memory 35 as necessary.

The encoder 36 encodes the uncompressed base band image data corresponding to the supplied P pictures as I pictures using intra-frame encoding, and supplies the generated I pictures to the proxy file storage unit 37. Also, the encoder 36 can set the compression rate and so forth, for example as parameters for compression processing (I picture generating).

Next, a case of fixing the bit rate for I pictures output from the encoder 36 will be described with reference to Fig. 4.

In the event of the encoder 36 fixing the bit rate of output I pictures, the I pictures are generated such that the bit rate is a predetermined bit rate corresponding to the storage capacity of the proxy file storage unit 37, for example. Generally, P pictures using forward reference have less information than I pictures, so image quality is more readily maintained by arranging for the bit rate of recompressing P pictures and encoding into I pictures to be a greater bit rate than the pre-conversion (P picture) bit rate, which is advantageous. Also, an arrangement may be made wherein this bit rate is settable by the user.

Next, a case of a variable bit rate for I pictures output from the encoder 36 will be descried with reference to Fig. 5.

The encoder 36 obtains the rate of the I pictures (the head I picture in each GOP) in the original bit stream from the bit stream analyzing unit 32 or the decoder 34, and generates I pictures so as to have a bit rate matching that value. Generally, the bit rate of I pictures in an original compressed stream reflect the complexity in the picture of that GOP. Accordingly, image quality deterioration can be prevented by varying the bit rate of the I pictures generated by conversion from P pictures, corresponding to the bit rate of the head I pictures reflecting the complexity of the picture in the GOP.

The proxy file storage unit 37 then generates and stores a proxy file (i.e., a representation data file), based on the I picture data supplied from the encoder 36 and generated as described with reference to Figs. 4 and 5 and supplied from the encoder 36.

The proxy index storage unit 38 obtains from the encoder 36 picture size (Proxy File Picture Size) and the addresses of these frames (Proxy File Address), as encoding information relating to the generated I picture each time uncompressed base band image data corresponding to a supplied P picture is encoded with the intra-frame encoding as an I picture and an I picture is generated, as a proxy index, in the form of a proxy index, which is stored and also supplied to the bit stream analyzing unit 32.

Fig. 6 is a block diagram illustrating a further detailed configuration example of the playing unit 12 in Fig. 1.

The playing unit 12 is made up of an operation input obtaining unit 51, a decoding processing unit 52, and a playback picture output unit 53.

The operation input obtaining unit 51 receives user operating input, and supplies a signal showing the user operating input to the decoding processing unit 52.

The decoding processing unit 52 is made up of an index file obtaining unit 61, a decoding control unit 62, a bit stream obtaining unit 63, a proxy file obtaining unit 64, a switch 65, a decoder 66, and a reference image memory 67, and executes decoding processing based on the user operating input supplied from the operation input obtaining unit 51, and supplies the decoded result to the playback picture output unit 53.

The index file obtaining unit 61 obtains the index file output from the index file storage unit 33 of the converting unit 11, and supplies this to the decoding control unit 62.

The bit stream obtaining unit 63 obtains the original bit stream supplied to the player device 1, and outputs a frame to be played and output, or a frame necessary for decoding of the frame to be played and output to the switch 65 based on the user operating input supplied from the operation input obtaining unit 51.

The proxy file obtaining unit 64 obtains the proxy file output from the proxy file storage unit 37 of the converting unit 11, i.e., the I picture data converted and generated from P pictures, and outputs a frame to be played and output, or a frame necessary for decoding of the frame to be played and output to the switch 65 based on the user operating input supplied from the operation input obtaining unit 51.

The switch 65 supplies either the original bit stream supplied from the bit stream obtaining unit 63, or the I pictures converted and output from the P pictures supplied from the proxy file obtaining unit 64 to the decoder 66 under control of the decoding control unit 62.

The decoding control unit 62 switches the switch 65 to control the bit stream supplied to the decoder 66 based on the index file supplied from the index file obtaining unit 61. Specifically, in the event that the frame intended to be played and output is the I picture of the original bit stream, the decoding control unit 62 controls the switch 65 such that the I picture of the original bit stream supplied to the player device 1 is supplied to the decoder 66. Also, in the event that the frame intended to be played and output is the P picture of the original bit stream, the decoding control unit 62 controls the switch 65 such that the I picture data converted and output from the P picture supplied from the proxy file obtaining unit 64 is supplied to the decoder 66. Also, in the event that the frame intended to be played and output is the B picture of the original bit stream, the decoding control unit 62 controls the switch 65 such that the I picture data converted and output from the P picture supplied from the proxy file obtaining unit 64 is supplied to the decoder 66, and decodes this to generate a reference image, following which controls the switch 65 such that the B picture of the original bit stream is supplied to the decoder 66.

The decoder 66 decodes the compressed frame image data supplied from the switch 65, generates an uncompressed base band image, and supplies this to the playback picture output unit 53. At this time, in the event that the uncompressed base band images generated are going to become necessary as reference images of frames to be decoded later, the decoder 34 also supplies the generated uncompressed base band images to reference image memory 67 for storage, and in the event of decoding P pictures, makes reference to the reference images stored in the reference image memory 67 as necessary.

The playback picture output unit 53 subjects the decoded uncompressed image data (base band image data) supplied from the decoder 66 to various types of correction, for example, such as color correction, size correction, or field control at the time of slow playback as necessary such that the decoded image is correctly played and output, and outputs the output base band image data following correction.

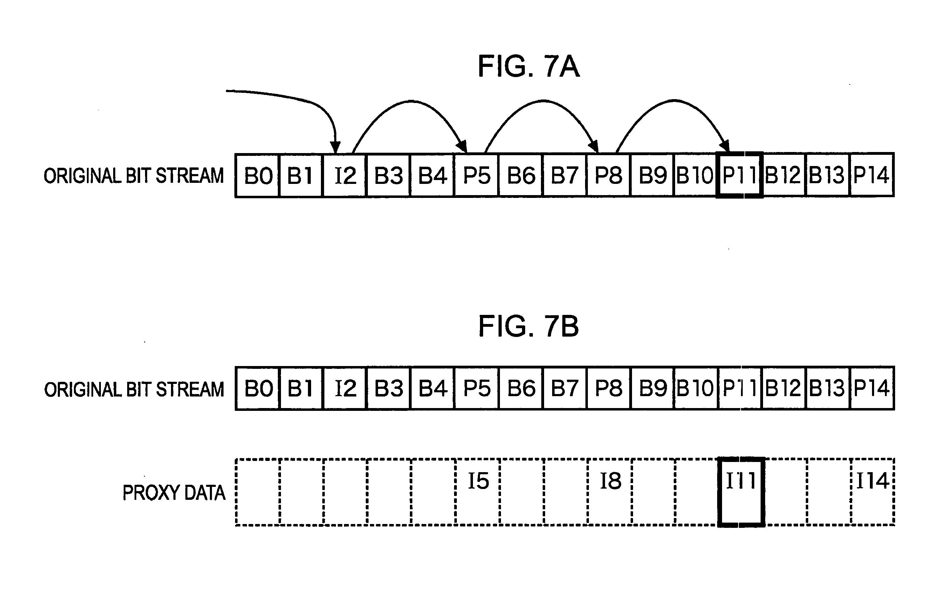

Next, a case of decoding P pictures in an original bit stream will be described, with reference to Figs. 7A and 7B.

For example, in the event of playback output for the frame P11 in an MPEG2 LongGOP bit stream, an arrangement according to the related art required that the frame 12 which is the head I picture of the GOP in which P 11 is included is decoded, following which the frames P5 and P8 are decoded and reference frame image data is generated, and finally the target frame P11 can be decoded, as shown in Fig. 7A.

Conversely, with the playing unit 12 to which the present invention is applied, the frame 111 which is the I picture subjected to intra-frame compression corresponding to the frame P11 is extracted from the proxy file and decoded, and playback output is performed, as shown in Fig. 7B.

Accordingly, in the event of using the playing unit 12 to which the present invention is applied to play and output the frame P11 again using the proxy file, decoding needs to be performed only once, as compared with the four times with the related art, so the specified frame can be played and output at high speed.

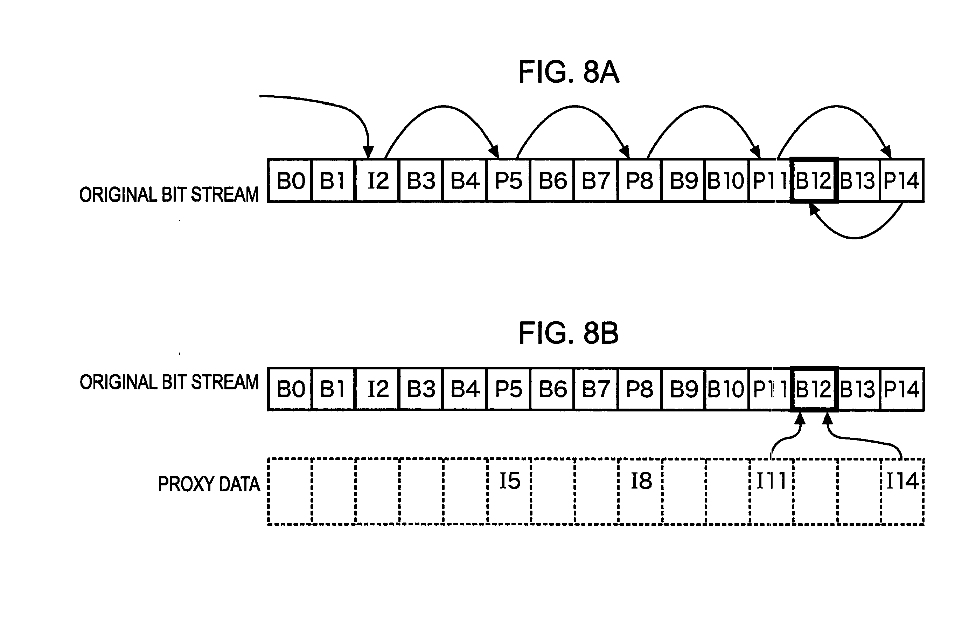

Next, a case of decoding B pictures in an original bit stream using the playing unit 12 will be described, with reference to Figs. 8A and 8B.

For example, in the event of playback output for the frame B 12 in an MPEG2 LongGOP bit stream, an arrangement according to the related art required that the frame 12 which is the head I picture of the GOP in which B12 is included is decoded, following which the frames P5, P8, P11, and P14 are decoded and reference frame image data is generated, and finally the target frame B12 can be decoded, as shown in Fig. 8A.

Conversely, with a case of playback output of the frame B12 using the playing unit 12 to which the present invention is applied, as shown in Fig. 8B, the frames I11 and I14 which are the I pictures subjected to intra-frame compression corresponding to the frames P11 and P 14 necessary as reference images for the frame B12 are decoded, these are used as reference images to decode the target B12 for playback output.

Accordingly, in the event of using the playing unit 12 to which the present invention is applied to play and output the frame B12, decoding needs to be performed only three times, as compared with the six times with the related art, so the specified frame can be played and output at high speed.

The above-describe series of processing can be executed by hardware, or can be executed by software. In this case, the player device 1 is configured of a personal computer such as shown in Fig. 9.

In Fig. 9, a CPU (Central Processing Unit) 221 executes various types of processing following programs stored in ROM (Read Only Memory) 222 or programs loaded from an HDD (Hard Disk Drive) 226 to RAM (Random Access Memory) 223. The RAM 223 also stores data necessary for the CPU 221 to execute the various types of processing.

The CPU 221, ROM 222, and RAM 223 are mutually connected via a bus 224. Also connected to this bus 224 are interfaces (I/F) 225-1 through 225-3, the HDD 226, a picture special effects audio mixing processing unit 227, and signal processing unit 228.

Connected to the interface 225-1 are input devices such as a keyboard 203, mouse 202, and so forth. Connected to the interface 225-2 is a storage device 204, arranged so as to be capable of exchanging information. Also, connected to the interface 225-3 are external picture recording/playing devices 205-1 through 205-m, so as to be capable of exchanging information. Note that the external picture recording/playing devices 205-1 through 205-m will hereafter be collectively referred to as "external picture recording/playing device 205" as appropriate. The HDD 226 drives a hard disk, so as to be able to store various types of information.

The picture special effects audio mixing processing unit 227 is also connected to a signal processing unit 228 and the external picture recording/playing device 205, so as to take picture signals supplied from one of the storage device 204 and the external picture recording/playing device 205, or supplied from the HDD 226 via the bus 224, and subject these picture signals to special effects, mixing of audio, and so forth, and then supply these to the signal processing unit 228 for output, or supplying these to one of the storage device 204 and the external picture recording/playing devices 205-1 through 205-m, for storage.

The signal processing unit 228 is connected to the display 229 and the speaker 230, and takes picture signals supplied from the picture special effects audio mixing processing unit 227 or the like for example, and supplies the picture signals to the display 229 for display and outputs the audio signals to the speaker 230 for audio output.

The display 229 is formed of, for example, a CRT (Cathode Ray Tube), LCD (Liquid Crystal Display), or the like, and displays pictures supplied from the signal processing unit 228. The speaker plays and outputs audio supplied from the signal processing unit 228.

Also connected to the bus 224 is a drive 231 if necessary, to which a removable medium 206 such as a magnetic disk, optical disk, magneto-optical disk, semiconductor memory, or the like, is mounted as appropriate, with computer programs read out therefrom being installed to the HDD 226 as necessary.

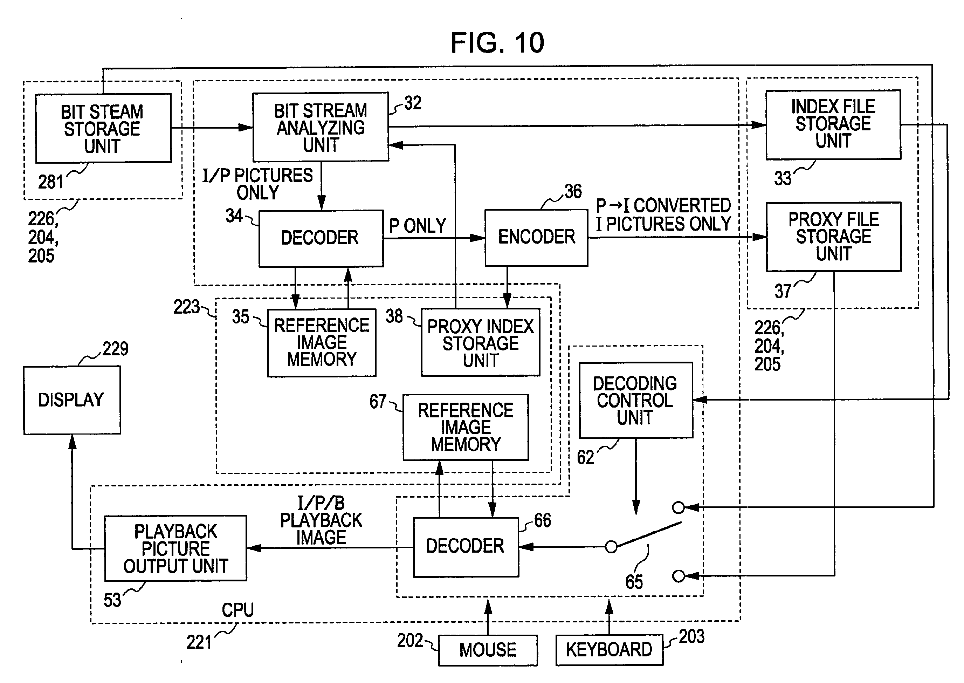

Fig. 10 is a functional block diagram illustrating an example of functions in the event of executing the processing to which the present invention has been applied, using software, on the personal computer 201 described with reference to Fig. 9.

Note that components which are the same as or equivalent to those in Fig. 2 or Fig. 6 or Fig. 9 are denoted with the same reference numerals, and description thereof will be omitted as appropriate.

The personal computer 201 realizes the same functions as the bit stream analyzing unit 32, decoder 34, and encoder 36 in Fig. 2, and the decoding control unit 62, switch 65, and playback picture output unit 56 in Fig. 6 by the CPU 221 executing a predetermined program.

Based on user operations input from an input device such as the mouse 202 or keyboard 203 or the like, the CPU 221 decodes the I pictures and P pictures in a but stream recorded in a bit stream storage unit 281 corresponding to one of the regions of the storage device 204, external picture recording/playing device 205, or HDD 226, using the region of the RAM 223 corresponding to the reference image memory 35, and encodes only the P pictures as I pictures, thereby generating a proxy file, which is stored in a proxy file storage unit 37 corresponding to one of the regions of the storage device 204, external picture recording/playing device 205, or HDD 226.

Further, each time uncompressed base band image data corresponding to a P picture is encoded as an I picture by intra-frame encoding to generate an I picture, the CPU 221 saves the picture size (Proxy File Picture Size) and the addresses of these frames (Proxy File Address), as encoding information relating to the generated I picture, in the region of the RAM 223 corresponding to the proxy index storage unit 38 as a proxy index, and further analyzes the bit stream and generates an index file described with reference to Fig. 3 by obtaining the proxy index saved in the proxy index storage unit 38 to be stored in the index file storage unit 33 corresponding to one of the regions of the storage device 204, external picture recording/playing device 205, or HDD 226.

Subsequently, the CPU 221 receives the instruction of a frame to be played and output based on the user operating input by the input device such as the mouse 202 or keyboard 203, and performs decoding by utilizing the area of the RAM 223 corresponding to the reference image memory 67 with reference to the index file stored in the index file storage unit 33 corresponding to any region of the storage unit 204, external picture recording/playing device 205, and HDD 226, as with the case in which description has been made with reference to Figs. 7 and 8.

Specifically, in the event that the frame to be played and output is the I picture in the original bit stream, the decoding control unit 62 of the CPU 221 supplies the corresponding I picture of the bit stream stored in the bit stream storage unit 281 to the decoder 66 to decode this. Subsequently, in the event that the frame to be played and output is the P picture in the original bit stream, the decoding control unit 62 of the CPU 221 supplies the corresponding I picture of the proxy files stored in the proxy file storage unit 37 to the decoder 66 to decode this. Also, in the event that the frame to be played and output is the B picture in the original bit stream, the decoding control unit 62 of the CPU 221 supplies the I pictures before and after the B picture to be played of the original bit stream stored in the bit stream storage unit 281, or the I pictures corresponding to the P pictures before and after the B picture to be played of the proxy files stored in the proxy file storage unit 37 to the decoder 66 to decode those, stores those in the region of the RAM 223 corresponding to the reference image memory 67, and with those as reference images, supplies the B picture to be played in the original bit stream to the decoder 66 to decode this.

Subsequently, the decoded frame image data is subjected to various types of processing by the playback picture output unit 53 of the CPU 221, and is output and displayed on the display 229.

Next, the proxy file generating processing 1 executed by the converting unit 11 described with reference to Fig. 2 of the player device 1 in Fig. 1 or at the CPU 221 of the personal computer described with reference to Figs. 9 and 10, will be described with reference to the flowchart shown in Fig. 11.

In step S1, the bit stream obtaining unit 31 (CPU 221) obtains the original bit stream, and supplies this to the bit stream analyzing unit 32 (the bit stream analyzing unit 32 of the CPU 221).

In step S2, the bit stream analyzing unit 32 (the bit stream analyzing unit 32 of the CPU 221) reads in the I pictures from the supplied original bit stream.

In step S3, the bit stream analyzing unit 32 (the bit stream analyzing unit 32 of the CPU 221) analyzes the read in picture. That is to say, the bit stream analyzing unit 32 obtains the information of the relevant picture in the index file described with reference to Fig. 3.

In step S4, the bit stream analyzing unit 32 (the bit stream analyzing unit 32 of the CPU 221) determines whether or not the picture read in is an I picture or P picture. In the event that determination is made in step S4 that the picture is neither an I picture nor a P picture, i.e., is a B picture, the processing proceeds to the later-described step S 10.

In the event that determination is made in step S4 that the picture is one of an I picture or a P picture, in step S5 the bit stream analyzing unit 32 (the bit stream analyzing unit 32 of the CPU 221) supplies the read I picture or P picture to the decoder 34. The decoder 34 decodes the supplied I picture or P picture, and stores this in reference image memory 35.

In step S6, the decoder 34 (the decoder 34 of the CPU 221) determines whether or not the decoded picture is a P picture. In the event that determination is made in step S6 that the decoded picture is not a P picture, i.e., is an I picture, the processing proceeds to the later-described step S10.

In the event that determination is made in step S6 that the decoded picture is a P picture, in step S7 the decoder 34 (the decoder 34 of the CPU 221) supplies an uncompressed image frame corresponding to the decoded P picture to the encoder 36 (the encoder 36 of the CPU 221). The encoder 36 encodes the supplied uncompressed image frame as an I picture, and supplies to the proxy file storage unit 37 (a proxy file storage unit 37 corresponding to a region of one of the storage device 204, external picture recording/playing device 205, or HDD 226).

In step S8, the proxy file storage unit 37 (proxy file storage unit 37 corresponding to a region of one of the storage device 204, external picture recording/playing device 205, or HDD 226) stores the proxy file configured of the encoded and generated I picture.

In step S9, the encoder 36 supplies the index information of the picture size (Proxy File Picture Size) and the addresses of these frames (Proxy File Address), as encoding information relating to the generated I picture, i.e., a proxy index, to the proxy index storage unit 38. The proxy index storage unit 38 stores the proxy index of the relevant picture.

In the event that determination is made in step S4 that the picture read in is neither an I picture nor a P picture, i.e., is a B picture, or in the event that determination is made in step S6 that the decoded picture is not a P picture, i.e., is an I picture, or following processing of step S9 ending, in step S 10 the bet stream analyzing unit 32 (CPU 221) determines whether or not processing of all pictures has ended. In the event that determination is made in step S10 that processing of all pictures has not ended, the flow returns to step S2, and the subsequent processing is repeated.

In the event that determination is made in step S 10 that processing of all pictures has ended, the bit stream analyzing unit 32 (the bit stream analyzing unit 32 of the CPU 221) generates the index file described with reference to Fig. 3, based on the analysis results of each of the pictures, and the frames encoded as I pictures by the encoder 36 that are stored in the proxy index storage unit 38, i.e., the picture size (Proxy File Picture Size) and addresses (Proxy File Address) of the frames converted from P pictures into I pictures, supplies this to the index file storage unit 33 (index file storage unit 33 corresponding to a region of one of the storage device 204, external picture recording/playing device 205, or HDD 226) for storage, and the processing ends.

Due to such processing, a proxy file of I pictures generated by P pictures in the original bit stream being decoded and then encoded as I pictures, and an index file listing information relating to the I pictures included in the original bit stream and the proxy file (P pictures in the original bit stream) are generated.

Next, the random playback processing 1 executed by the playing unit 12 described with reference to Fig. 6 of the player device 1 in Fig. 1 or at the CPU 221 of the personal computer described with reference to Figs. 9 and 10, will be described with reference to the flowchart shown in Fig. 12.

In step S41, the bit stream obtaining unit 63 (CPU 221) obtains the original bit stream, the proxy file obtaining unit 64 (CPU 221) obtains the proxy file generated at the converting unit 11, and the index file obtaining unit 61 (CPU 221) obtains the index file generated at the converting unit 11.

In step S42, the decoding control unit 62 (the decoding control unit 62 of the CPU 221) reads in one picture worth of index data to be played next based on the user operating input obtained from the operation input obtaining unit 51.

In step S43, the decoding control unit 62 (the decoding control unit 62 of the CPU 221) determines whether or not the picture to be played next is a B picture.

In step S43, in the event that determination is made that the picture to be played next is not a B picture, i.e., is an I picture or P picture, the decoding control unit 62 (the decoding control unit 62 of the CPU 221) determines in step S44 whether or not the picture to be played next is the P picture in the original bit stream.

In step S44, in the event that determination is made that the picture to be played next is the P picture in the original bit stream, the decoding control unit 62 (the decoding control unit 62 of the CPU 221), in step S45, controls the switch 65 (the switch 65 of the CPU 221) to supply the I picture included in the proxy file obtained by the proxy file obtaining unit 64, i.e., the I picture corresponding to the P picture of the original bit stream to the decoder 66 (the decoder 66 of the CPU 221). The decoder 66 decodes the I picture supplied, supplies this to the playback picture output unit 53 (the playback picture output unit 53 of the CPU 221) to output this, and the processing proceeds to later-described step S50.

In step S44, in the event that determination is made that the picture to be played next is not the P picture in the original bit stream, i.e., is the I picture in the original bit stream, the decoding control unit 62 (the decoding control unit 62 of the CPU 221), in step S46, controls the switch 65 to supply, of the original bit stream obtained by the bit stream obtaining unit 63, the corresponding I picture to the decoder 66. The decoder 66 decodes the I picture supplied, supplies this to the playback picture output unit 53 (the playback picture output unit 53 of the CPU 221) to output this, and the processing proceeds to later-described step S50.

In step S43, in the event that determination is made that the picture to be played next is a B picture, the decoding control unit 62 (the decoding control unit 62 of the CPU 221) controls the switch 65 to supply the I pictures in the original bit stream before and after the B picture to be decoded, or the I pictures of the proxy file to the decoder 66 with reference to the index file obtained by the index file obtaining unit 61. The decoder 66 reads in the I pictures supplied.

In step S48, the decoder 66 (the decoder 66 of the CPU 221) decodes the I pictures read in, and stores these in the reference image memory 67 (the region corresponding to the reference image memory 67 of the RAM 223).

In step S49, the decoding control unit 62 (the decoding control unit 62 of the CPU 221) controls the switch 65 to supply the B picture to be played of the original bit stream obtained by the bit stream obtaining unit 63 to the decoder 66. The decoder 66 decodes the B picture supplied with reference to the reference images stored in the reference image memory 67, and supplies this to the playback picture output unit 53 (the playback picture output unit 53 of the CPU 221) to output this.

Following the processing in step S45, step S46, or step S49 being completed, the decoding control unit 62 (the decoding control unit 62 of the CPU 221) determines in step S50 whether or not the processing of all of the pictures of which playback instructions were received has been completed. In the event that determination is made in step S50 that processing of all pictures of which playback instructions were received has not ended, the flow returns to step S42, and the subsequent processing is repeated. In the event that determination is made in step S50 that the processing of all of the pictures of which playback instructions were received has been completed, the processing ends.

The period of time necessary for decoding a P picture or B picture with the above processing is reduced as described with reference to Figs. 7 and 8 as compared with the past case.

Thus, the player device 1 to which the present invention is applied is made up of the converting unit 11 for receiving a compressed bit stream, analyzing this to generate an index file, and also converting the P picture into an I picture to generate a proxy file, and the playing unit 12 for realizing the decoding processing of a predetermined frames at high speed in response to user operating input based on the compressed bit stream, index file, and proxy file.

Also, the personal computer 201 to which the present invention has been applied can have the same functions as those of the converting unit 11 and playing unit 12 of the player device 1 in Fig. 1 by executing predetermined programs.

With the converting unit 11, only the I pictures and P pictures are decoded from the supplied original bit stream, and only the frames corresponding to the P picture are encoded again as I pictures, thereby generating a proxy file.

At this time, the data rate of the I pictures of the generated proxy file may be of a fixed rate or may be varied according to the frame rate of the head I picture in the GOP corresponding to the original bit stream (i.e., may be a varied rate).

The index file generated at the converting unit 11 includes not only information necessary for decoding the original bit stream, but also includes information relating to the picture size and addresses and the like of the I pictures included in the proxy file, i.e., of the frames which were P pictures in the original bit stream but then encoded as I pictures.

With the playing unit 12, the index file is referenced, and in the event of decoding the I picture in the original bit stream to play and output this, the corresponding I picture in the original bit stream is decoded. In the event of decoding the P picture in the original bit stream to play and output this, the corresponding I picture in the proxy file (the P picture in the original bit stream) is decoded. In the event of decoding the B picture in the original bit stream to play and output this, the I pictures in the original bit stream before and after the B picture to be played and output, or the I pictures of the proxy file (the P picture in the original bit stream) are decoded so as to be employed as a reference image, thereby decoding the B picture of the original bit stream.

Thus, the decoding time in random playback can be reduced.

Also, performing PI conversion wherein P pictures are converted into I pictures and switching between the pre-conversion stream and the converted portions thereof so as to perform decoding processing as described above enables the decoding time to be reduced and random access capabilities to be improved. However, the process for converting the P picture portions of the original stream into I pictures before editing or playback takes time. For example, if we say that there are 5 P pictures in a 15-frame stream in 1 GOP, it takes time to decode all of the 5 frames and convert into I pictures (re-encode following decoding).

Accordingly, the bit stream analyzing unit 32 shown in Fig. 2 may be arranged to not convert all P pictures into I pictures at the time of performing PI conversion, but rather control the decoder 34, encoder 36, and proxy file storage unit 37, so as to convert only a part of the P pictures into I pictures as necessary, so as to generate a proxy file and store the proxy file.

The processing time for PI conversion is dependent on the number of P pictures to be converted into I pictures (to be encoded following decoding), so reducing the number of pictures to be converted enables the amount of processing time (time for generating proxy files) to be shortened. The bit stream analyzing unit 32 preferably takes a level wherein the longest number of frames for decoding the post-conversion stream does not exceed the capabilities of the decoder, as a judgment standard for determining the number of pictures for conversion. The longest number of frames necessary for decoding the post-conversion stream (hereafter referred to as "number of decodable frames") also differs according to whether the playback mode is scrub playback or normal playback, for example.

Specifically, the number of decodable frames may be set beforehand (with the number of frames directly specified), for example, or may be specified by a higher order application. For example, the number of decodable frames may be set according to the number of decoders and CPUs used for decoding processing or by the clock frequency. In such cases, the bit steam analyzing unit 32 does not need to calculate the number of decodable frames, and simply obtains the specified number of decodable frames.

Conversely, in the event that only time allocation T given from the higher order application for decoding processing (e.g., 20 ms) is specified, the bit steam analyzing unit 32 needs to calculate the number of decodable frames.

Also, at this time, the bit steam analyzing unit 32 preferably selects P pictures to be converted into I pictures such that the converted P pictures are not consecutive, as much as possible, so as to reduce the number of P pictures converted into I pictures as to the number of decodable frames.

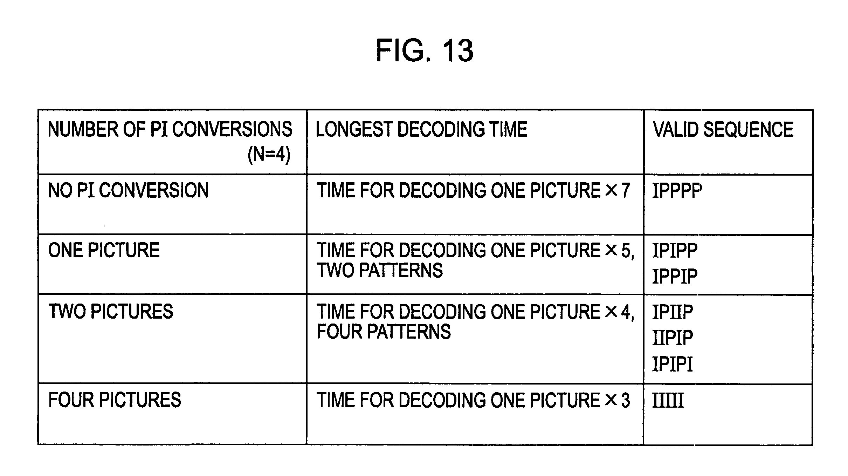

Next, a PI conversion variation in a case of 15 frames per GOP, and the number of P pictures N = 4 (IBBPBBPBBPBBPBB) will be described with reference to Fig. 13.

For example, in the event that no PI conversion is performed, the valid sequence (the picture types for the 5 frames of I pictures and P pictures excluding the B pictures) is IPPPP, and the longest decoding time is the time necessary for decoding 7 frames in a case of OpenGOP and a GOP which is not the head of the stream, in a case of decoding the two B pictures following the I picture in the stream order (e.g., B0 B1 in Figs. 7 or 8).

As described above, in the event of performing PI conversion of all four P pictures, the valid sequence is II III, so the longest decoding time is the time necessary for decoding three frames of any of the B pictures.

Conversely, in the event of not converting all of the P pictures which can be converted by reducing these to a certain number changes the longest decoding time of random decoding as shown in Fig. 13. That is to say, in the event of performing PI conversion of only one of the four P pictures, the valid sequences is IPIPP or IPPIP due to selecting the P pictures to be converted into I pictures so that the P pictures for conversion are not consecutive as much as possible, so the longest decoding time is the time required for decoding 5 frames. Also, in the event of performing PI conversion of only two of the four P pictures, the valid sequences is IPIIP, IIPIP, or IPIPI due to selecting the P pictures to be converted into so that the P pictures for conversion are not consecutive as much as possible, so the longest decoding time is the time required for decoding 4 frames.

Note that in the event of performing PI conversion for only one of the four P pictures, so that the P pictures for conversion are not consecutive as much as possible i.e., only the case of the valid sequence shown in Fig. 13, and in the event of performing PI conversion for only two of the four P pictures, the longest decoding time which is the shortest is the case wherein the P pictures are selected for conversion into I pictures so that the P pictures are not consecutive for two frames in a row in the post-conversion sequence, and in the event of performing PI conversion for only one of the P pictures, the shortest is the case wherein the P pictures are selected for conversion so that the P pictures are not consecutive for three frames in a row in the post-conversion sequence.

Next, Figs. 14A through 18B will be used to describe specific decoding processing wherein not all of the P pictures for conversion are converted but reduced to a certain number.

A case of decoding processing wherein only one of the four P pictures is subjected to PI conversion for a valid sequence of IPIPP will be described with reference to Figs. 14A and 14B.

As shown in Fig. 14A, in a case of converting the picture P8 of the four P pictures included in the 15 frames arrayed in the display order of B0, B1, 12, B3, B4, P5, B6, B7, P8, B9, and so on, into an I picture, and preparing an 18 picture for the proxy file, the longest decoding time is a case wherein B0 or B1 is decoded, and as shown in Fig. 14B, in addition to the reference images 18, P11, P14, and 12, B0 or B1 (B0 is shown in Fig. 14B) require decoding, for a total of 5 pictures needing decoding.

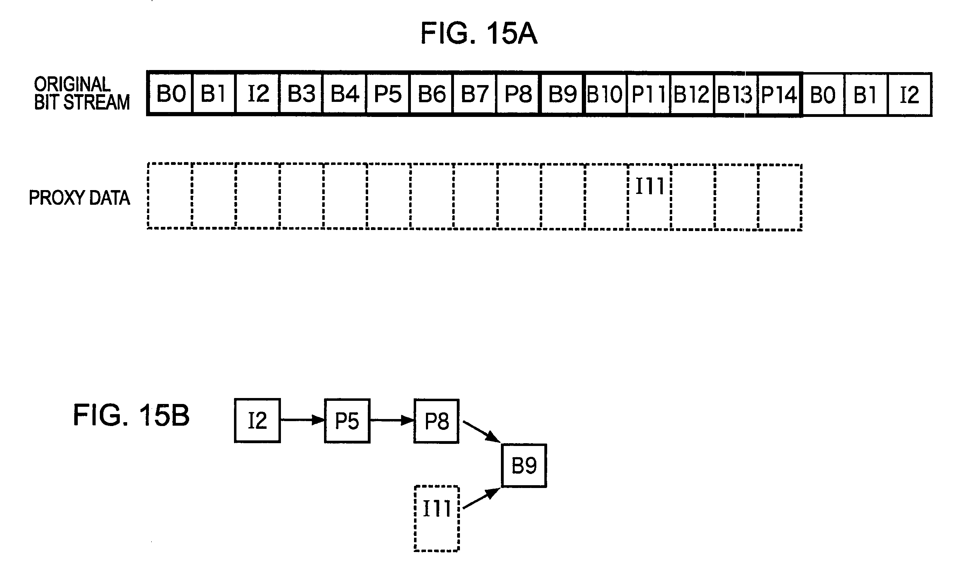

A case of decoding processing wherein only one of the four P pictures is subjected to PI conversion for a valid sequence of IPPIP will be described with reference to Figs. 15A and 15B.

As shown in Fig. 15A, in a case of converting the picture P11 of the four P pictures included in the 15 frames arrayed in the display order of B0, B1, 12, B3, B4, P5, B6, B7, P8, B9, and so on, into an I picture, and preparing an I11 picture for the proxy file, the longest decoding time is a case wherein B9 or B10 is decoded, and as shown in Fig. 15B, in addition to the reference images I2, P5, P8, and I11, B9 or B10 (B9 is shown in Fig. 15B) require decoding, for a total of 5 pictures needing decoding.

Note that the longest decoding time is not always 5 pictures worth in all cases of performing PI conversion of one of the four P pictures. That is to say, the case of 5 pictures with for the longest decoding time is only cases wherein there are no instances of three consecutive post-conversion P pictures, as shown in Figs. 14A through 15B. In all other cases, for example, such as in cases wherein the post-conversion sequence is IIPPP or IPPPI or the like, there are cases wherein the longest decoding time requires 6 pictures worth, thereby reducing the effects of PI conversion.

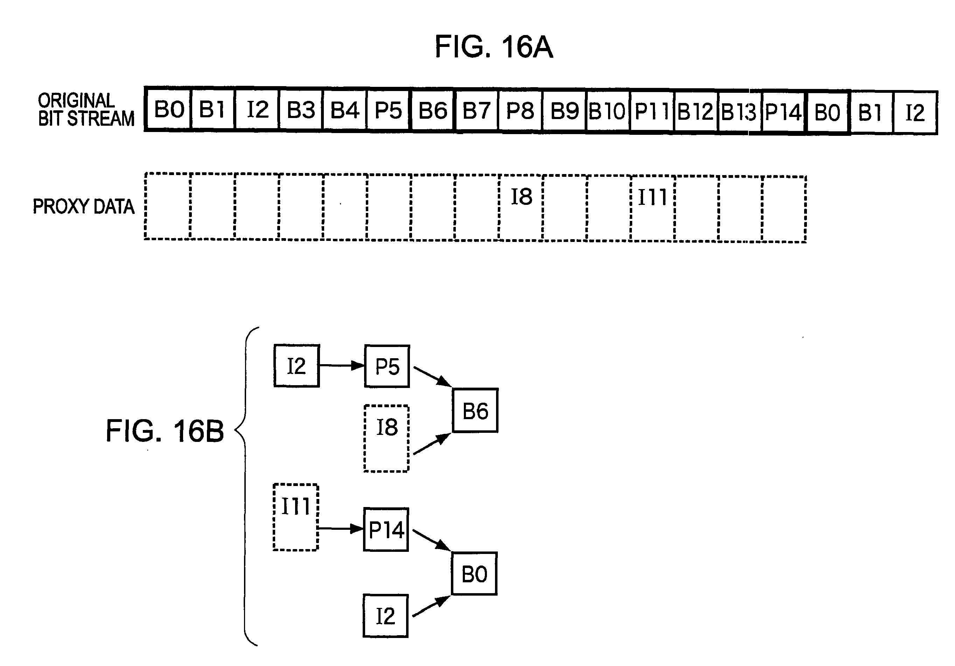

Next, a case of decoding processing wherein two of the four P pictures are subjected to PI conversion for a valid sequence of IPIIP will be described with reference to Figs. 16A and 16B.

As shown in Fig. 16A, in a case of converting the pictures P8 and P11 of the four P pictures included in the 15 frames arrayed in the display order of B0, B1, I2, B3, B4, P5, B6, B7, P8, B9, and so on, into I pictures, and preparing 18 and 111 pictures for the proxy file, the longest decoding time is a case wherein B6 or B7, or B0 or B1 is decoded, and as shown in Fig. 16B, in addition to the reference images I2, P5, and I8, B6 or B7 (B6 is shown in Fig. 16B) require decoding, for a total of 4 pictures needing decoding, or, is a case wherein, in addition to the reference images I11, P14, and I2, B0 or B1 (B0 is shown in Fig. 16B) require decoding, for a total of 4 pictures needing decoding.

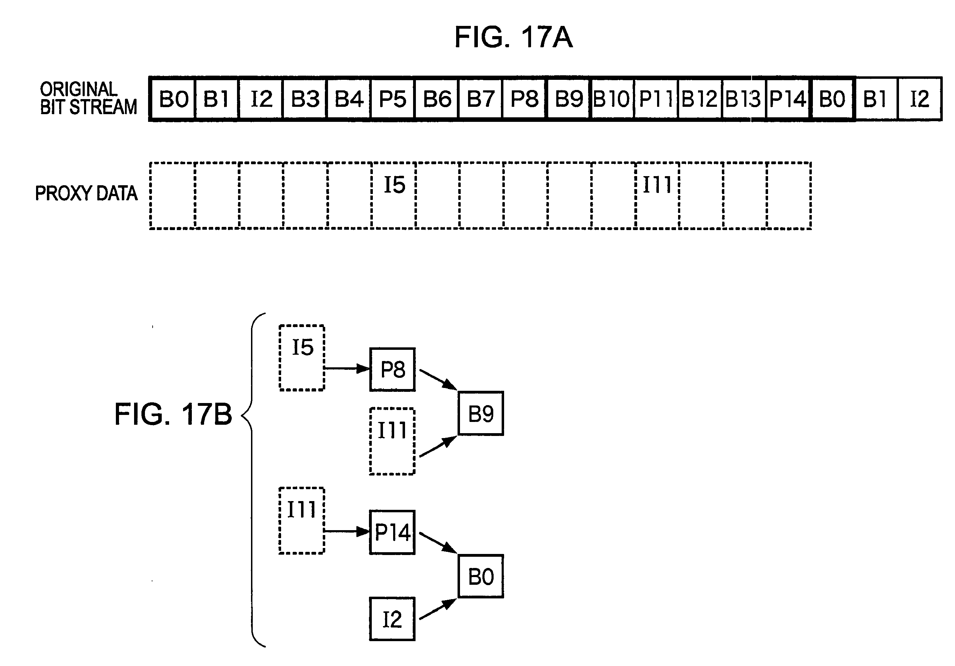

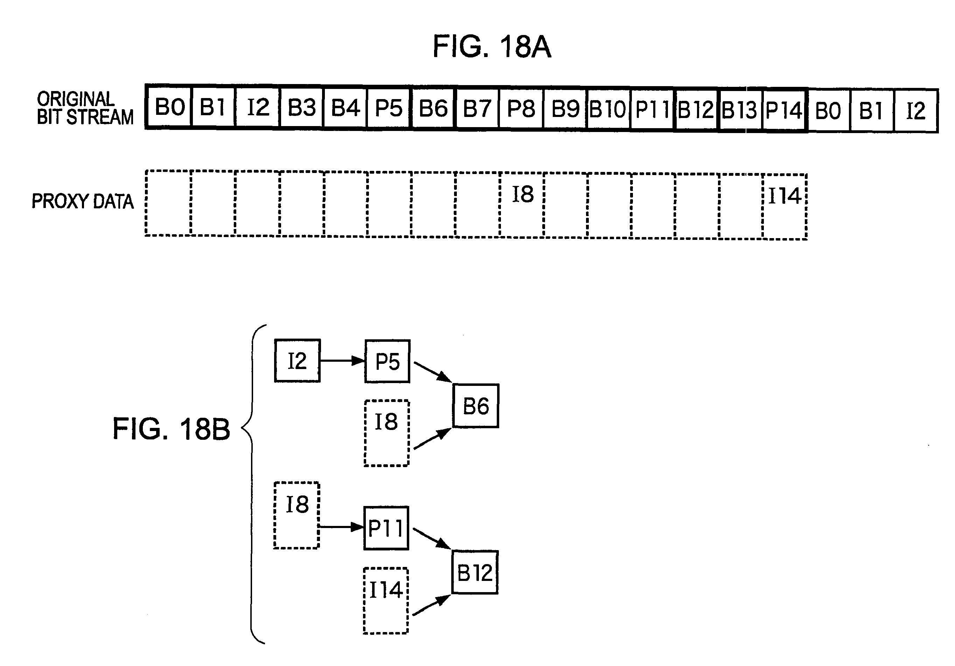

In the same way, a case of decoding processing wherein two of the four P pictures are subjected to PI conversion for a valid sequence of IIPIP will be described with reference to Figs. 17A and 17B, and a case of decoding processing wherein two of the four P pictures are subjected to PI conversion for a valid sequence of IPIPI will be described with reference to Figs. 18A and 18B.

As shown in Fig. 17A, in a case of converting the pictures P5 and P11 of the four P pictures included in the 15 frames arrayed in the display order of B0, B1, 12, B3, B4, P5, B6, B7, P8, B9, and so on, into I pictures, and preparing 15 and I11 pictures for the proxy file, the longest decoding time is a case wherein B9 or B10, or wherein B0 or B1 are decoded, and as shown in Fig. 17B, in addition to the reference images 15, P8, and I11, B9 or B10 (B9 is shown in Fig. 17B) require decoding, for a total of 4 pictures needing decoding, or, is a case wherein, in addition to the reference images I11, P14, and 12, B0 or B1 (B0 is shown in Fig. 17B) require decoding, for a total of 4 pictures needing decoding.

Further, as shown in Fig. 18A, in a case of converting the pictures P8 and P14 of the four P pictures included in the 15 frames arrayed in the display order of B0, B1, I2, B3, B4, P5, B6, B7, P8, B9, and so on, into I pictures, and preparing I8 and I14 pictures for the proxy file, the longest decoding time is a case wherein B6 or B7 or wherein B 12 or B 13 are decoded, and as shown in Fig. 18B, in addition to the reference images 12, P5, and 18, B6 or B7 (B6 is shown in Fig. 18B) require decoding, for a total of 4 pictures needing decoding, or, is a case wherein, in addition to the reference images 18, P11, and I14, B 12 or B 13 (B 12 is shown in Fig. 18B) require decoding, for a total of 4 pictures needing decoding.

In this case as well, the longest decoding time is not always 4 pictures worth in all cases of performing PI conversion of two of the four P pictures. That is to say, the case of 4 pictures worth for the longest decoding time is only cases wherein there are no instances of two consecutive post-conversion P pictures, as shown in Figs. 16A through 18B. In all other cases, for example, such as in cases wherein the post-conversion sequence is IIPPI or IPPII or the like, the effects of PI conversion are reduced.

Now, while description has been made with regard to cases in Figs. 14A through 18B wherein the number of B pictures between I pictures and P pictures is two, the number of reference images necessary for decoding continuous B pictures is the same even in the case wherein the number of B pictures between I pictures and P pictures is two or more, so it is needless to say that the longest decoding time for each case is the same.

Next, setting processing for P pictures to be converted will be described with reference to the flowchart in Fig. 19.

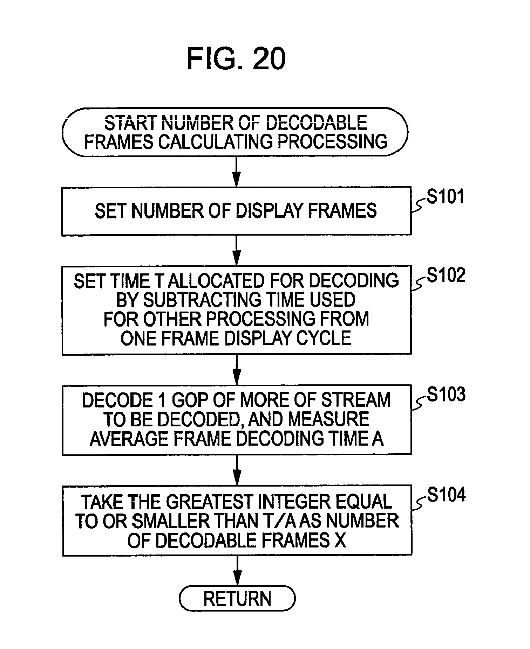

In step S81, number of decodable frames calculation processing which is the same as that described with reference to Fig. 20 is executed, and the number of decodable frames is obtained.

Note that in the event that the number of decodable frames has been set beforehand or specified by a higher order application, the bit stream analyzing unit 32 of the converting unit 11 does not execute the number of decodable frames calculating processing in step S81 but simply obtains the number of decodable frames determined beforehand or specified by the higher order application.

In step S82, the bit stream analyzing unit 32 of the converting unit 11 determines whether or not N + 3 > X holds, wherein the number of P pictures within one GOP in the bit stream obtained by the bit stream obtaining unit 31 is N, and the number of decodable frames is X.

In the event that determination is made in step S82 that N + 3 > X does not hold, in step S83 the bit stream analyzing unit 32 ends processing since PI conversion is not to be performed.

In the event that N + 3 ≤ X holds, the amount of time necessary for frame decoding processing which is the longest for a bit stream with no PI conversion is shorter than the time necessary for decoding the frames of the number of decodable frames X. That is to say, in such a case, there is no need to perform PI conversion.

In the event that determination is made in step S82 that N + 3 > X holds, that is to say, in the event that judgment is made that the amount of time necessary for frame decoding processing which is the longest for a bit stream with no PI conversion is longer than the time necessary for decoding the frames of the number of decodable frames X, in step S84, the bit steam analyzing unit 32 tentatively sets the PI skip number S, which is the greatest consecutive occurrences of P pictures in the post-PI-conversion sequence wherein the decoding processing can keep up, to X - 3.

In step S85, the bit stream analyzing unit 32 determines whether or not N/S > 1 holds in the event that S = X - 3. In the event that N/S > 1 is determined to hold in step S85, the bit stream analyzing unit 32 sets the PI skip number S to X - 3 in step S86.

In the event that N/S > 1 is determined to not hold in step S85, the bit stream analyzing unit 32 sets the PI skip number S to N/2 (the nearest integer if not an integer) in step S87.

Following the processing of step S86 or step S87, in step S88 the bit stream analyzing unit 32 sets the P pictures for conversion based on the PI skip number S, and the processing ends.

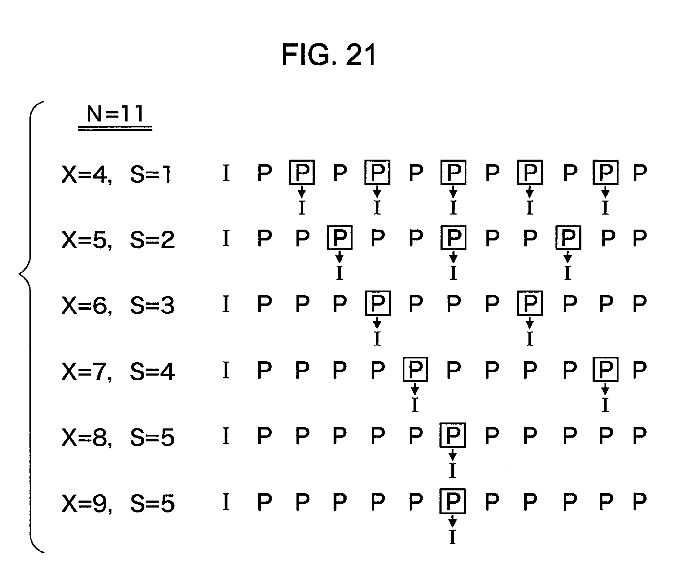

Due to such processing, the PI skip number, which is the greatest consecutive number of P pictures wherein the decoding processing for the post-PI-conversion sequence can still keep up, is determined based on the number of decodable frames and the number of P pictures within one GOP, and the P pictures for conversion into I pictures are determined based on this. Thus, by the number of P pictures for Pi conversion being reduced as much as possible, the time for generating a proxy file can be reduced as compared with a case wherein all P pictures are converted into I pictures. The specific setting example of the P picture to be converted into an I picture will be described later with reference to Fig. 21.

Next, the number of decodable frames calculating processing executed in step S81 in Fig. 19 will be described with reference to the flowchart in Fig. 20.

In step S101, the bit stream analyzing unit 32 sets the number of display frames per unit time, such as 30 frames per second, 15 frames per second, or the like.

In step S102, the bit stream analyzing unit 32 sets the time T given for decoding processing for one frame by subtracting the time used for other processing from one frame display cycle.

Specifically, in the event that 13 ms are used per frame for processing other than decoding for example, in the case that 30 frames are to be displayed per second, 1/30 = 33 ms and 33 - 13 = 20 ms, so 20 ms is set as the time T given for decoding processing for one frame, and in the case that 15 frames are to be displayed per second, 1/15 = 66 ms and 66 - 13 = 53 ms, so 53 ms is set as the time T given for decoding processing for one frame.

In step S103, the bit stream analyzing unit 32 decodes one GOP or more of the streams to be decoded, and an average decoding time A per frame is measured.

In step S104, the bit stream analyzing unit 32 computes T/A, takes the largest integer equal to or under T/A to be the number of decodable frames X, and the flow returns to step S81 in Fig. 19 and proceeds to step S82.

According to such processing, the number of decodable frames X is calculated, and is employed for setting of a P picture to be subjected to PI conversion.

Description will be made regarding the relationships between the number of decodable frames X and a PI skips number S, and the setting of a P picture to be converted into an I picture in the case of the number of P pictures N included in one GOP is 11 (N = 11) with reference to Fig. 21.

For example, in the case of X = 4 and S = 1, post-PI-conversion P pictures must not be consecutive, so in the post-PI-conversion sequence, IPIPIPIPIPIP is the sequence. Also, in the case of X = 5 and S = 2 for example, only two post-PI-conversion P pictures can be consecutive, so in the post-PI-conversion sequence, IPPIPPIPPIPP is the sequence. Also, in the case of X = 6 and S = 3 for example, only three post-PI-conversion P pictures can be consecutive, so in the post-PI-conversion sequence, IPPPIPPPIPPP is the sequence.

Also, in the case of X = 7 and S = 4 for example, up to four post-PI-conversion P pictures can be consecutive, so in the post-PI-conversion sequence, IPPPPIPPPPIP may be used as the sequence, or in a case wherein the number of consecutive P pictures is four or less and the number converted to I pictures is two or less, other sequences (e.g., IPPPPIPPPIPP) may be used. However, the number of consecutive P pictures is preferably small, so in the case of X = 7, S = 4, a valid sequence of IPPPIPPPIPPP as with the case of X = 6, S = 3 is more preferable since the number of PI conversion pictures is the same and the longest decoding time can be reduced further.

Also, in the case of X = 8 and S = 5 for example, up to five post-PI-conversion P pictures can be consecutive, so in the post-PI-conversion sequence, IPPPPPIPPPPP is the sequence. Also, in the case of X = 9 and S = 5 for example, N/S > 1 is determined in the above step S85, so the bit stream analyzing unit 32 sets the PI skip number S to N/2 (the nearest integer if not an integer), so S = 5. Also note that in the case of 14 (= N + 3) > X ≥ 10, N/S > 1 is determined in the above step S85, so the bit stream analyzing unit 32 sets the PI skip number to S = 5. At this time, the post-PI-conversion sequence is IPPPPPIPPPPP.

Also, in the event that X ≥ 14 (= N + 3), determination is made that there is no need for PI conversion.

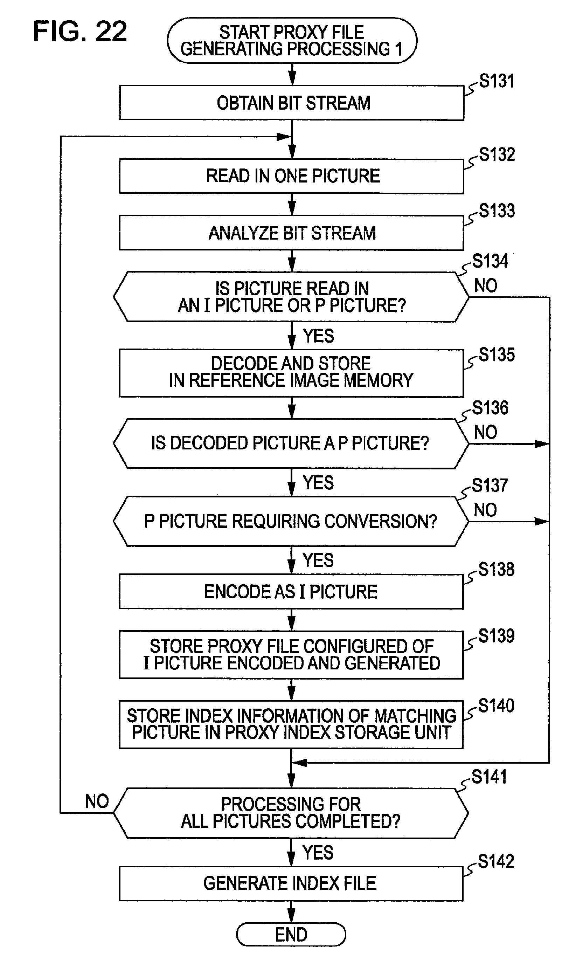

Next, the proxy file generating processing 2 executed by the converting unit 11 described with reference to Fig. 2 of the player device 1 in Fig. 1 or at the CPU 221 of the personal computer described with reference to Figs. 9 and 10, will be described with reference to the flowchart shown in Fig. 22.

In steps S131 through S 136, processing the same as that of the steps S1 through S6 described with reference to Fig. 11 are executed.

That is to say, the bit stream obtaining unit 31 (CPU 221) obtains the original bit stream, and supplies this to the bit stream analyzing unit 32 (the bit stream analyzing unit 32 of the CPU 221). The bit stream analyzing unit 32 (the bit stream analyzing unit 32 of the CPU 221) reads in and analyzes one picture from the supplied original bit stream. That is to say, the bit stream analyzing unit 32 obtains the information of the relevant picture in the index file described with reference to Fig. 3.

The bit stream analyzing unit 32 (the bit stream analyzing unit 32 of the CPU 221) then determines whether or not the picture read in is an I picture or P picture. In the event that determination is made that the picture is neither an I picture nor a P picture, i.e., is a B picture, the processing proceeds to the later-described step S 141.

In the event that determination is made that the picture is one of an I picture or a P picture, the bit stream analyzing unit 32 (the bit stream analyzing unit 32 of the CPU 221) supplies the read I picture or P picture to the decoder 34. The decoder 34 decodes the supplied I picture or P picture, and stores this in reference image memory 35.

The decoder 34 (the decoder 34 of the CPU 221) then determines whether or not the decoded picture is a P picture. In the event that determination is made that the decoded picture is not a P picture, i.e., is an I picture, the processing proceeds to the later-described step S 141.

In the event that determination is made in step S136 that the decoded picture is a P picture, in step S137 the decoder 34 (the decoder 34 of the CPU 221) determines whether or not the P picture is P picture needing conversion, i.e., P picture regarding which setting has been made for conversion into an I picture in the above-described setting processing, under control of the bit stream analyzing unit 32. In the event that determination is made in step S137 that the P picture is not a P picture requiring conversion, the flow proceeds to the later-described step S 141.

In the event that determination is made in step S137 that the P picture is a P picture requiring conversion, in step S 13 8 the decoder 34 (the decoder 34 of the CPU 221) supplies an uncompressed image frame corresponding to the decoded P picture to the encoder 36 (the encoder 36 of the CPU 221). The encoder 36 encodes the supplied uncompressed image frame as an I picture, and supplies to the proxy file storage unit 37 (a proxy file storage unit 37 corresponding to a region of one of the storage device 204, external picture recording/playing device 205, or HDD 226).

In step S139, the proxy file storage unit 37 (proxy file storage unit 37 corresponding to a region of one of the storage device 204, external picture recording/playing device 205, or HDD 226) stores the proxy file configured of the encoded and generated I picture.

In step S140, the encoder 36 supplies the index information of the picture size (Proxy File Picture Size) and the addresses of these frames (Proxy File Address), as encoding information relating to the generated I picture, i.e., a proxy index, to the proxy index storage unit 38. The proxy index storage unit 38 stores the proxy index of the picture.

In the event that determination is made in step S134 that the picture is neither an I picture nor a P picture, i.e., is a B picture, or in the event that determination is made in step S136 that the decoded picture is not a P picture, i.e., is an I picture, or in the event that determination is made in step S137 that the P picture is not a P picture requiring conversion, or following processing of step S 140 ending, in step S 141 the bet stream analyzing unit 32 (CPU 221) determines whether or not processing of all pictures has ended. In the event that determination is made in step S 141 that processing of all pictures has not ended, the flow returns to step S132, and the subsequent processing is repeated.

In the event that determination is made in step S 141 that processing of all pictures has ended, in step S142 the bit stream analyzing unit 32 (the bit stream analyzing unit 32 of the CPU 221) generates the index file described with reference to Fig. 17, based on the analysis results of each of the pictures, and the frames encoded as I pictures by the encoder 36 that are stored in the proxy index storage unit 38, i.e., the picture size (Proxy File Picture Size) and addresses (Proxy File Address) of the frames converted from P pictures into I pictures, supplies this to the index file storage unit 33 (index file storage unit 33 corresponding to a region of one of the storage device 204, external picture recording/playing device 205, or HDD 226) for storage, and the processing ends.

Due to such processing, a proxy file of I pictures generated by P pictures in the original bit stream being decoded and then encoded as I pictures, and an index file listing information relating to the I pictures included in the original bit steam and the proxy file (P pictures in the original bit stream) are generated.

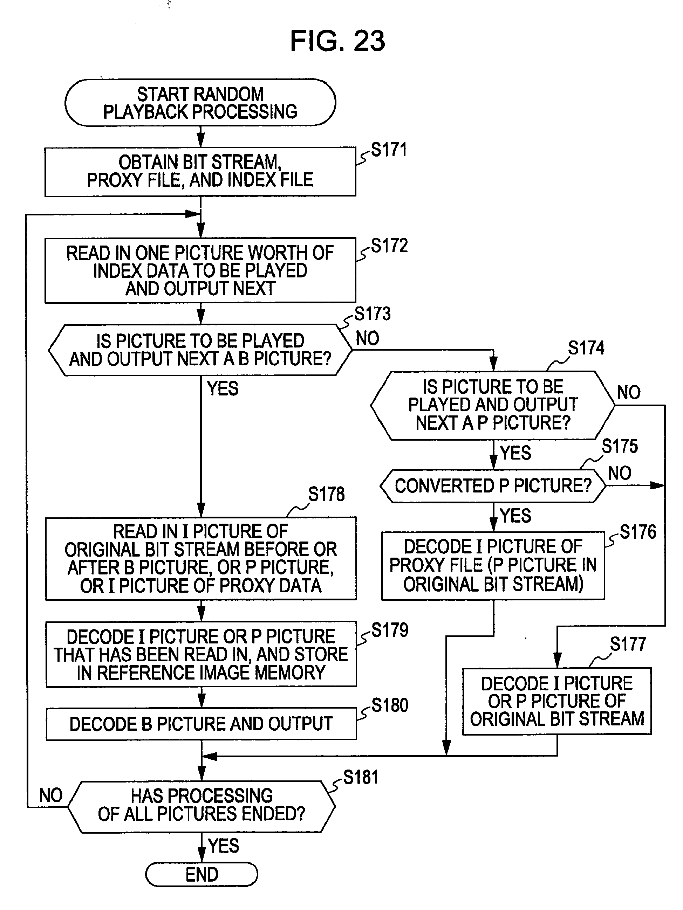

Next, the random playback processing 2 executed by the playing unit 12 described with reference to Fig. 6 of the player device 1 in Fig. 1 or at the CPU 221 of the personal computer described with reference to Figs. 9 and 10, will be described with reference to the flowchart shown in Fig. 23,

In steps S171 through S 174, processing the same as that of the steps S41 through S44 described with reference to Fig. 12 is executed.

That is to say, the bit stream obtaining unit 63 (CPU 221) obtains the original bit stream, the proxy file obtaining unit 64 (CPU 221) obtains the proxy file generated at the converting unit 11, and the index file obtaining unit 61 (CPU 221) obtains the index file generated at the converting unit 11.

Subsequently, the decoding control unit 62 (the decoding control unit 62 of the CPU 221) reads in one picture worth of index data to be played next based on the user operating input obtained by the operation input obtaining unit 51, and determines whether or not the picture to be played next is a B picture. In the event that determination is made that the picture to be played next is a B picture, the processing proceeds to step S 178.

In the event that determination is made that the picture to be played next is not a B picture, i.e., is an I picture or P picture, the decoding control unit 62 (the decoding control unit 62 of the CPU 221) determines whether or not the picture to be played next is the P picture in the original bit stream. In the event that the picture to be played next is determined not to be the P picture in the original bit stream, the flow proceeds to the later-described step S 177.

Subsequently, in the event that determination is made in step S 174 that the picture to be played next is the P picture in the original bit stream, the decoding control unit 62 (the decoding control unit 62 of the CPU 221) determines in step S 175 whether or not the P picture to be played next is the P picture converted into an I picture at the time of generating the proxy file.

In the event that determination is made in step S 175 that the P picture to be played next is the P picture converted into an I picture at the time of generating the proxy file, in step S 176, the decoding control unit 62 (the decoding control unit 62 of the CPU 221) controls the switch 65 (the switch 65 of the CPU 221) to supply the I picture included in the proxy file obtained by the proxy file obtaining unit 64, i.e., the I picture corresponding to the P picture of the original bit stream to the decoder 66 (the decoder 66 of the CPU 221). The decoder 66 decodes the I picture supplied, supplies this to the playback picture output unit 53 (the playback picture output unit 53 of the CPU 221) to output this, and the processing proceeds to later-described step S 181.

In the event that determination is made in step S 174 that the picture to be played next is not the P picture in the original bit stream, i.e., is the I picture in the original bit stream, or in the event that determination is made in step S 175 that the P picture to be played next is not the P picture converted into an I picture at the time of generating the proxy file (i.e., is the P picture not converted into an I picture at the time of generating the proxy file), in step S177, the decoding control unit 62 (the decoding control unit 62 of the CPU 221) controls the switch 65 to supply the corresponding I picture or P picture, of the original bit stream obtained by the bit stream obtaining unit 63 to the decoder 66. The decoder 66 decodes the I picture supplied, supplies this to the playback picture output unit 53 (the playback picture output unit 53 of the CPU 221) to output this, and the processing proceeds to later-described step S 181.

Note that in the event that the P picture to be referenced to decode the P picture is the P picture converted into an I picture at the time of generating the proxy file, it is needless to say that the I picture included in the proxy file is employed as a reference image.

In the event that determination is made in step S 173 that the picture to be played next is a B picture, in step S 178, the decoding control unit 62 (the decoding control unit 62 of the CPU 221) controls the switch 65 to supply the I pictures or P pictures in the original bit stream before and after the B picture to be decoded, or the I pictures of the proxy file to the decoder 66 with reference to the index file obtained by the index file obtaining unit 61. The decoder 66 reads in the I pictures or P pictures supplied.

In step S 179, the decoder 66 (the decoder 66 of the CPU 221) decodes the I pictures or P pictures read in, and stores these in the reference image memory 67 (the region corresponding to the reference image memory 67 of the RAM 223).

In step S 180, the decoding control unit 62 (the decoding control unit 62 of the CPU 221) controls the switch 65 to supply the B picture to be played of the original bit stream obtained by the bit stream obtaining unit 63 to the decoder 66. The decoder 66 decodes the supplied B picture with reference to the reference images stored in the reference image memory 67, and supplies this to the playback picture output unit 53 (the playback picture output unit 53 of the CPU 221) to output this.

Following the processing in step S 176, step S 177, or step S 180 being completed, the decoding control unit 62 (the decoding control unit 62 of the CPU 221) determines in step S 181 whether or not the processing of all of the pictures of which playback instructions were received has been completed. In the event that determination is made in step S 181 that processing of all pictures of which playback instructions were received has not ended, the flow returns to step S 172, and the subsequent processing is repeated. In the event that determination is made in step S 181 that the processing of all of the pictures of which playback instructions were received has been completed, the processing ends.

The time spent for generating the proxy file with such processing is shorter than the case described with reference to Figs. 11 and 12, but despite of this, the time spent for decoding the P pictures and B picture is reduced shorter than the case in the past, and accordingly, the decoding processing does not result in failure.

Thus, the number of P pictures to be subjected to PI conversion (following being decoded, P pictures to be encoded again into I pictures) is obtained according to the number of decodable frames, and the P pictures to be converted are determined, whereby the longest decoding time at the decoding processing can be reduced by utilizing the proxy file while reducing the conversion time necessary for converting the P pictures into I pictures (in other words, the generating time of the proxy file).

Note that description has been made here assuming that the player device 1 including the converting unit 11 and the playing unit 12 is configured as a single device, but it is needless to say that the converting unit 11 and the playing unit 12 may be configured as different devices.

The above-described series of processing can be executed by hardware as described above, or may be executed by software. In the event of executing the sequence of processing with software, a program making up the software is installed into a computer built into dedicated hard ware, or into a general-purpose computer for example, which is capable of executing various types of functions by installation of various types of programs, from networks or recording media.

The recording media is not restricted to removable media 206 distributed to the user separately from the device proper so as to provide the user with the program as shown in Fig. 9, such as magnetic disks (including floppy disks), optical disks (including CD-ROM (Compact Disk-Read Only Memory) and DVD (Digital Versatile Disk)) magneto-optical disks (including MD (Mini-Disk)), semiconductor memory, and so forth, and also includes ROM 222 or the hard disk in the HDD 226 and so forth, in which the program is recorded, and built into the device proper for being provided to the user in that state.

Also, it should be noted that with the present specifications, the steps described in the program stored in the recording media may of course be performed in the time-sequence of the order described, but do not necessarily need to be performed in the time-sequence of the order described, and includes processing which is performed in parallel or independently as well.

It should be further understood that in the present specification, the term "system" refers to the collective configuration of multiple devices.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A program for causing a computer to execute processing including the steps of:
forward prediction encoded frame decoding, for decoding a forward prediction encoded frame of a bit stream,
encoding, for subjecting the forward prediction encoded frame decoded with the processing in said forward prediction encoded frame decoding to intra-frame encoding,
analyzing, for analyzing said bit stream, and
attribute information generating, for generating attribute information utilizable for decoding said bit stream based on the encoded information relating to the encoded data generated with the processing in said encoding and the analysis results obtained with the processing in said analyzing.

2. The program according to Claim 1 for causing a computer to execute processing further including a step of bit stream decoding, for decoding said bit stream based on the encoded data encoded with the processing in said encoding, and said attribute information generated with the processing in said attribute information generating.

3. The program according to Claim 2, wherein the processing in said bit stream decoding includes
determining, for determining the encoded type of a frame to be decoded,
first decoding, for decoding said intra-frame encoded frame to be decoded of said bit stream, in the event that determination is made with the processing in said determining that a frame to be decoded is an intra-frame encoded frame of said bit frame,
second decoding, for decoding said encoded data corresponding to said forward prediction encoded frame to be decoded, of the encoded data encoded with the processing in said encoding, in the event that determination is made with the processing in said determining that a frame to be decoded is a forward prediction encoded frame of said bit stream,
reference image generating, for generating a reference image by decoding the intra-frame encoded frame of said bit stream necessary for decoding said both-way prediction encoded frame, or generating a reference image by decoding said encoded data corresponding to the forward prediction encoded frame of said bit stream necessary for decoding said both-way prediction encoded frame of the encoded data encoded with the processing in said encoding, in the event that determination is made with the processing in said determining that a frame to be decoded is a both-way prediction encoded frame of said bit stream, and
third decoding, for decoding the both-way prediction encoded frame of said bit stream with reference to said reference image generated with the processing in said reference image generating.

4. The program according to Claim 1, wherein the processing in said encoding encodes said forward prediction encoded frame decoded with the processing in said forward prediction encoded frame decoding into intra-frame encoded data having a fixed rate.

5. The program according to Claim 1, wherein the processing in said encoding encodes said forward prediction encoded frame decoded with the processing in said forward prediction encoded frame decoding into intra-frame encoded data having a floating rate.

6. The program according to Claim 1, wherein the processing in said forward prediction encoded frame decoding selectively decodes a predetermined number of forward prediction encoded frames of said bit stream; and
wherein the processing in said encoding subjects a predetermined number of said forward prediction encoded frames decoded with the processing in said forward prediction encoded frame decoding to intra-frame encoding.

7. The program according to Claim 6 further including a step of setting, for setting said predetermined number of said forward prediction encoded frames to be decoded selectively with the processing in said forward prediction encoded frame decoding based on the number of frames, which can be subjected to decoding processing during display of an image corresponding to one frame, and the number of forward prediction encoded frames.

8. The program according to Claim 7, further comprising a step of calculating the number of frames regarding which decoding processing can be performed during the display time of an image corresponding to one frame.

9. The program according to Claim 6, wherein the processing in said forward prediction encoded frame decoding selectively decodes a predetermined number of forward prediction encoded frames to be decoded so as to suppress a continuous number of a predetermined number of forward prediction encoded frames of said bit stream to the minimum.

10. An information processing device for generating information utilizable for decoding a bit stream, comprising:
forward prediction encoded frame decoding means configured to decode a forward prediction encoded frame of said bit stream;
encoding means configured to subject said forward prediction encoded frame decoded by said forward prediction encoded frame decoding means to intra-frame encoding; and
attribute information generating means configured to analyze said bit stream, and generate attribute information utilizable for decoding said bit stream based on the analysis results of said bit stream and the encoded information relating to the encoded data generated by said encoding means.

11. The information processing device according to Claim 10, further comprising bit stream decoding means configured to decode said bit stream based on the encoded date generated by said encoding means and said attribute information generated by said attribute information generating means.

12. An information processing method of an information processing device for generating information utilizable for decoding a bit stream, comprising the steps of:
forward prediction encoded frame decoding for decoding a forward prediction encoded frame, of said bit stream;
encoding, for subjecting said forward prediction encoded frame decoded with the processing in said forward prediction encoded frame decoding to intra-frame encoding;
analyzing, for analyzing said bit stream; and
attribute information generating, for generating attribute information utilizable for decoding said bit stream based on the encoded information relating to the encoded data generated with the processing in said encoding and the analysis results obtained with the processing in said analyzing.

13. A storage medium storing the program according to Claim 1.

14. An information processing device for generating information utilizable for decoding a bit stream, comprising:
a forward prediction encoded frame decoding unit configured to decode a forward prediction encoded frame of said bit stream;
an encoding unit configured to subject said forward prediction encoded frame decoded by said forward prediction encoded frame decoding unit to intra-frame encoding; and
an attribute information generating unit configured to analyze said bit stream, and generate attribute information utilizable for decoding said bit stream based on the analysis results of said bit stream and the encoded information relating to the encoded data generated by said encoding unit.
